# EUROPEAN PATENT APPLICATION

(11) **EP 4 814 689 A1**
(43) Date of publication of application: **30.09.2026**
(21) Application number: 26152466.4
(22) Date of filing: 16.01.2026
(51) Int. Cl.: G06F 3/12, G06T 15/50, H04N 1/60

(54) **INFORMATION PROCESSING SYSTEM, PROGRAM, AND INFORMATION PROCESSING METHOD**

(30) Priority: 24.03.2025 JP 2025048549; 19.08.2025 JP 2025136366
(71) Applicant: FUJIFILM Business Innovation Corp., Minato-ku Tokyo (JP)
(72) Inventor: ARIEDA, Kota, Yokohama-shi (JP); TAKAISHI, Shinya, Yokohama-shi (JP); NISHIKUNI, Yuichi, Yokohama-shi (JP)
(74) Representative: Haseltine Lake Kempner LLP

(57) **Abstract**

An information processing system includes a processor configured to: generate, based on print data used for at least generating a printed material and information on a light source used for observing the printed material, a video representing changes in orientation of the printed material when the printed material is observed in a specific direction; and output the video as a file. The video includes an image of the printed material positioned in an orientation in which a maximum luminance value or a value in a vicinity thereof of light, which is emitted from the light source and is reflected by the printed material, is observed in a region where gloss appears in the printed material.

## Description

### Background

### (i) Technical Field

The present disclosure relates to an information processing system, a program, and an information processing method.

### (ii) Related Art

A technology is known in which multiple rendering images that reflect the texture of a printed material are generated from image data to be printed and the generated rendering images are displayed as preview images. Another technology is also known in which a printed material is output by using print conditions corresponding to a rendering image selected from among the generated rendering images. Such technologies are disclosed in Japanese Unexamined Patent Application Publication No. 2023-176168, for example.

### Summary

In the above-described technologies, when a user selects a rendering image, print conditions corresponding to the selected rendering image are set, and outputting of a printed material is then started. When outputting a printed material particularly with metallic colors using spot color toners that provide a glossy appearance, it is desirable to check, by means of a three-dimensional image as a print preview, how the gloss of the printed material would appear before starting printing. To check the appearance of gloss, the printed material may be rotated, and the gloss can be perceived differently depending on the inclination angle of the printed material.

Accordingly, it is an object of the present disclosure to make it easy to create a video that allows a user to check the appearance of gloss in a print preview of a printed material using glossy spot color toner or a foil-stamped printed material.

According to a first aspect of the present disclosure, there is provided an information processing system including a processor configured to: generate, based on print data used for at least generating a printed material and information on a light source used for observing the printed material, a video representing changes in orientation of the printed material when the printed material is observed in a specific direction; and output the video as a file. The video includes an image of the printed material positioned in an orientation in which a maximum luminance value or a value in a vicinity thereof of light, which is emitted from the light source and is reflected by the printed material, is observed in a region where gloss appears in the printed material.

According to a second aspect of the present disclosure, in the information processing system according to the first aspect, the processor is configured to: set, when a distribution shape of luminance values of the reflected light, which is obtained by varying an inclination angle of the printed material to be displayed, is a first shape, a speed for varying the inclination angle to a first speed, the inclination angle being varied to include an inclination angle at which the printed material is positioned in an orientation when being observed in the specific direction in which the maximum luminance value or a value in a vicinity thereof of the reflected light is observed; and set, when the distribution shape of the luminance values of the reflected light is a second shape, the second shape being broader than the first shape, the speed for varying the inclination angle to a second speed, the second speed being faster than the first speed.

According to a third aspect of the present disclosure, in the information processing system according to the first or second aspect, the processor is configured to: set, when a distribution shape of luminance values of the reflected light, which is obtained by varying an inclination angle of the printed material to be displayed, is a first shape, a variable range of the inclination angle to a first angle range, the inclination angle being varied to include an inclination angle at which the printed material is positioned in an orientation when being observed in the specific direction in which the maximum luminance value or a value in a vicinity thereof of the reflected light is observed; and set, when the distribution shape of the luminance values of the reflected light is a second shape, the second shape being broader than the first shape, the variable range of the inclination angle to a second angle range, the second angle range being greater than the first angle range.

According to a fourth aspect of the present disclosure, in the information processing system according to one of the first through third aspects, the processor is configured to: set a speed for varying an inclination angle of the printed material to be displayed to a first speed when a region where the gloss appears in part of the printed material is determined based on the print data and when a surface roughness of the determined region is a first roughness; and set the speed for varying the inclination angle of the printed material to a second speed, the second speed being faster than the first speed, when the surface roughness of the determined region is a second roughness, the second roughness being larger than the first roughness.

According to a fifth aspect of the present disclosure, in the information processing system according to one of the first through fourth aspects, the processor is configured to: set a variable range of an inclination angle of the printed material to be displayed to a first angle range when a region where the gloss appears in part of the printed material is determined based on the print data and when a surface roughness of the determined region is a first roughness; and set the variable range of the inclination angle to a second angle range, the second angle range being greater than the first angle range, when the surface roughness of the determined region is a second roughness, the second roughness being larger than the first roughness.

According to a sixth aspect of the present disclosure, in the information processing system according to one of the first through fifth aspects, the processor is configured to: when a plurality of regions are determined, based on the print data, as a region where the gloss appears in part of the printed material, determine a third line passing through a center or a centroid of a first region and a center or a centroid of a second region, the first region being a region where a minimum luminance value or a minimum surface roughness value is observed among the plurality of regions, the second region being a region where the maximum luminance value or a maximum surface roughness value is observed among the plurality of regions; determine, after the third line is determined, a fourth line which is perpendicular to the third line and which passes through a center position of the printed material; and control the orientation of the printed material to be displayed by using the fourth line as a rotational axis.

According to a seventh aspect of the present disclosure, in the information processing system according to one of the first through sixth aspects, the processor is configured to, when a plurality of regions are determined, based on the print data, as a region where the gloss appears in part of the printed material, control the orientation of the printed material to be displayed, for each of the plurality of regions, in accordance with a relationship between a position of the light source represented by the information on the light source and a position of a corresponding region where the gloss appears.

According to an eighth aspect of the present disclosure, in the information processing system according to one of the first through seventh aspects, the processor is configured to, when a plurality of regions are determined, based on the print data, as a region where the gloss appears in part of the printed material, vary an inclination angle of the printed material to be displayed by including an inclination angle at which the printed material is positioned in an orientation when being observed in the specific direction in which the maximum luminance value or a value in a vicinity thereof of the reflected light is observed in a region selected by a user from among the plurality of regions.

According to a ninth aspect of the present disclosure, in the information processing system according to one of the first through eighth aspects, the processor is configured to, when a region where the gloss appears in part of the printed material is determined based on the print data, control the orientation of the printed material to be displayed in accordance with a relationship between a position of the light source represented by the information on the light source and a position of the region where the gloss appears.

According to a tenth aspect of the present disclosure, in the information processing system according to the ninth aspect, the processor is configured to: determine a first line passing through the position of the light source and a center or a centroid of the region where the gloss appears; determine, after the first line is determined, a second line which is perpendicular to the first line and which passes through a center position of the printed material; and control the orientation of the printed material by using the second line as a rotational axis.

According to an eleventh aspect of the present disclosure, in the information processing system according to the ninth aspect, the processor is configured to, when a plurality of regions are determined as the region where the gloss appears in part of the printed material, control the orientation of the printed material for each of the plurality of regions in accordance with the relationship between the position of the light source and the position of a corresponding region where the gloss appears.

According to a twelfth aspect of the present disclosure, in the information processing system according to the ninth aspect, the processor is configured to, when a plurality of regions are determined as the region where the gloss appears in part of the printed material, control the orientation of the printed material in accordance with the relationship between the position of the light source and a position of a region selected by a user from among the plurality of regions.

According to a thirteenth aspect of the present disclosure, in the information processing system according to one of the first through twelfth aspects, the processor is configured to, when a region where the gloss appears in part of the printed material is determined based on the print data and when anisotropic reflected light is observed in the region where the gloss appears, control the orientation of the printed material to be displayed with respect to a first rotational axis and a second rotational axis, the first rotational axis being determined by a relationship between a position of the light source represented by the information on the light source and a position of the region where the gloss appears, the second rotational axis being determined by a direction in which the anisotropic reflected light is observed.

According to a fourteenth aspect of the present disclosure, in the information processing system according to the thirteenth aspect, the processor is configured to add a third rotational axis between the first rotational axis and the second rotational axis and to control the orientation of the printed material also with respect to the third rotational axis.

According to a fifteenth aspect of the present disclosure, in the information processing system according to one of the first through fourteenth aspects, the processor is configured to: generate a manually operable file; generate a video file; and switch between generation of the video file and generation of the manually operable file.

According to a sixteenth aspect of the present disclosure, there is provided a program causing a computer to execute a process including: generating, based on print data used for at least generating a printed material and information on a light source used for observing the printed material, a video representing changes in orientation of the printed material when the printed material is observed in a specific direction; and outputting the video as a file. The video includes an image of the printed material positioned in an orientation in which a maximum luminance value or a value in a vicinity thereof of light, which is emitted from the light source and is reflected by the printed material, is observed in a region where gloss appears in the printed material.

According to a seventeenth aspect of the present disclosure, there is provided an information processing method including: generating, based on print data used for at least generating a printed material and information on a light source used for observing the printed material, a video representing changes in orientation of the printed material when the printed material is observed in a specific direction; and outputting the video as a file, wherein the video includes an image of the printed material positioned in an orientation in which a maximum luminance value or a value in a vicinity thereof of light, which is emitted from the light source and is reflected by the printed material, is observed in a region where gloss appears in the printed material.

The information processing system according to the first aspect can make it easy to create a video that allows a user to check the appearance of gloss in a print preview of a printed material using glossy spot colors or a foil-stamped printed material.

The information processing system according to the second aspect can make it easy to check gloss characteristics appearing on the surface of a printed material.

The information processing system according to the third aspect can make it easy to check the gloss characteristics appearing on the surface of a printed material.

The information processing system according to the fourth aspect can make it easy to check the gloss characteristics appearing on the surface of a printed material.

The information processing system according to the fifth aspect can make it easy to check the gloss characteristics appearing on the surface of a printed material.

The information processing system according to the sixth aspect can make it easy to check variations in the appearance of gloss even in a case where gloss is present in multiple regions.

The information processing system according to the seventh aspect can make it easy to check variations in the appearance of gloss in each of multiple regions.

The information processing system according to the eighth aspect can make it easy to check the appearance of gloss in a specific region selected by a user.

The information processing system according to the ninth aspect can make it easy to check the appearance of gloss regardless of where gloss appears in a printed material.

The information processing system according to the tenth aspect can make it easy to check the appearance of gloss regardless of where gloss appears in a printed material.

The information processing system according to the eleventh aspect can make it easy to check variations in the appearance of gloss even in a case where gloss is distributed over multiple regions of a printed material.

The information processing system according to the twelfth aspect can make it easy to check the appearance of gloss in a specific region selected by a user.

The information processing system according to the thirteenth aspect can make it easy to check the appearance of gloss in a region where anisotropic reflection occurs.

The information processing system according to the fourteenth aspect can make it easy to check the appearance of gloss in a region where anisotropic reflection occurs.

The information processing system according to the fifteenth aspect can make it easy for a user to switch between file formats in accordance with the user's intended use.

The program according to the sixteenth aspect can make it easy to create a video that allows a user to check the appearance of gloss in a print preview of a printed material using glossy spot colors or a foil-stamped printed material.

The information processing method according to the seventeenth aspect can make it easy to create a video that allows a user to check the appearance of gloss in a print preview of a printed material using glossy spot colors or a foil-stamped printed material.

### Brief Description of the Drawings

Exemplary embodiments of the present disclosure will be described in detail based on the following figures, wherein:
Fig. 1 is a block diagram illustrating an example of the configuration of a print system;
Fig. 2 is a block diagram illustrating an example of the hardware configuration of a controller;
Fig. 3 is a block diagram illustrating an example of the functional configuration of the controller;
Fig. 4 is a flowchart illustrating an example of display processing of a preview image;
Fig. 5 illustrates a display example of a preview image in the initial orientation;
Fig. 6 illustrates how a preview image appears differently when the orientation of the preview image is changed;
Fig. 7 illustrates an example of a file format selection screen displayed after a "file generate" button is pressed;
Fig. 8 is a schematic view illustrating a specific orientation in which the maximum luminance or a value in its vicinity is observed;
Fig. 9 is a graph illustrating the relationship between the luminance and an inclination angle when a printed material (preview image) is rotated around a rotational axis;
Fig. 10 is a schematic view and a graph illustrating an approach to determining a specific orientation when a glossy texture portion is included only in part of a printed material;
Fig. 11 is a schematic view and a graph illustrating another approach to determining a specific orientation when a glossy texture portion is included only in part of a printed material;
Figs. 12A and 12B are graphs illustrating that the rotation range regarded as a specific orientation becomes different in accordance with the waveform of the luminance which varies in response to the inclination angle;
Figs. 13A and 13B are graphs illustrating an example of playback control for an image file based on the surface roughness;
Fig. 14 is a schematic view illustrating an approach to setting a rotational axis in accordance with the positional relationship between a light source and a glossy texture portion;
Fig. 15 is a schematic view illustrating another approach to setting a rotational axis in accordance with the positional relationship between a light source and a glossy texture portion;
Fig. 16 is a schematic view illustrating an example of the approach to determining specific orientations when three glossy texture portions are included in a printed material;
Fig. 17 is a schematic view illustrating an example of setting of a rotational axis and the translational movement of a light source in approach 8;
Fig. 18 is a schematic view illustrating an example of the approach to determining a rotational axis dedicated to the use of a texture portion selected by a user;
Fig. 19 is a schematic view illustrating an example of a printed material including a texture portion which exhibits anisotropic gloss;
Fig. 20 is a flowchart illustrating approach 10;
Fig. 21 is a schematic view illustrating examples of setting of the rotational axis when a texture portion exhibits anisotropic gloss;
Fig. 22 is a schematic view and graphs illustrating an example of setting of the rotation angle when a printed material includes multiple glossy texture portions;
Fig. 23 illustrates another example of the file format selection screen displayed after the "file generate" button is pressed;
Fig. 24 is a table illustrating comparison results between video files and user-operable files;
Figs. 25A and 25B are graphs illustrating a difference in the rotation range regarded as a specific orientation depending on the application order of a metallic color and the surface roughness; and
Figs. 26A and 26B are graphs illustrating a difference in the rotation range regarded as a specific orientation depending on the application order of a metallic color and the maximum luminance.

### Detailed Description

Exemplary embodiments of the disclosure will be described below with reference to the accompanying drawings.

### (Terms)

A printed material refers to paper or another planar medium on which text and/or an image are printed.

Media used for printing can be classified into unprocessed plain paper and processed paper, for example. Examples of processed paper are glossy paper, coated paper, matte paper, and specialty paper. Examples of the specialty paper are foil-stamped paper, paper with glitter particles, and metallized paper.

An image forming apparatus is a device that receives print data and outputs a printed material. The image forming apparatus may be called a printer, meaning that a device outputs a printed material.

The image forming apparatus is not limited to a device dedicated to printing. The image forming apparatuses include commercial-use devices (also called production printers, for example) and office-use devices (also called copying machines or multifunction devices, for example). Printing methods of the image forming apparatuses include an electrophotographic system, an inkjet method, and offset printing, for example.

The print data is data to be input into the image forming apparatus. The print data may be page description language (PDL) data or may be bitmap data, for example. The PDL data is described in vector format, while the bitmap data is expressed in units of pixels.

Print data includes color information. The color information indicates colors including Y (yellow), M (magenta), C (cyan), K (black), and spot colors. The spot colors include metallic colors, such as silver and gold, and colors other than YMCK. The spot colors may include information indicating whether foil stamping is applied and the type and the position of foil stamping. An image formed by a metallic color or metallic foil stamping becomes a glossy image. This is because light emitted from a light source and reflected by the image contains more specular reflection components than diffuse reflection components. Such a glossy image is an example of a glossy texture, which will be discussed later.

The light source is a light-emitting element used for observing a printed material. The light sources include natural light sources and illumination light sources, for example. Examples of the natural light sources are the sun and the moon. Examples of the illumination light sources are bulbs, fluorescent lamps, and light-emitting diode (LED) light sources.

The light sources are also classified into point light sources, surface light sources, parallel light sources, and line light sources. The light source colors are classified into light bulb color, warm white, neutral color, and daylight color, for example. The light source color may also be represented by the color temperature.

### (Exemplary Embodiment)

### (System Configuration)

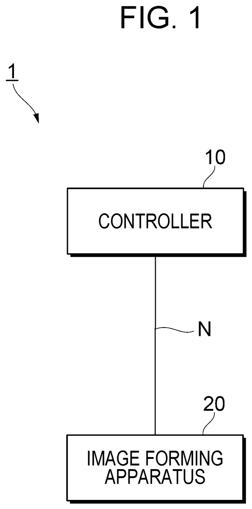

Fig. 1 is a block diagram illustrating an example of the configuration of a print system 1.

The print system 1 shown in Fig. 1 includes a controller 10 and an image forming apparatus 20 connected to each other via a signal path. As the signal path, the Ethernet (registered trademark), for example, is used. The controller 10 is an example of an information processing system.

The controller 10 has a function of controlling the generation of a printed material by the image forming apparatus 20 and a function of displaying, as a three-dimensional preview, the appearance of color and/or texture of a printed material to be generated from print data supplied to the image forming apparatus 20. The controller 10 is a computer.

In the example in Fig. 1, the controller 10 and the image forming apparatus 20 are connected to each other on a one-to-one basis. However, multiple image forming apparatuses 20 may be connected to the single controller 10.

### (Hardware Configuration of Controller)

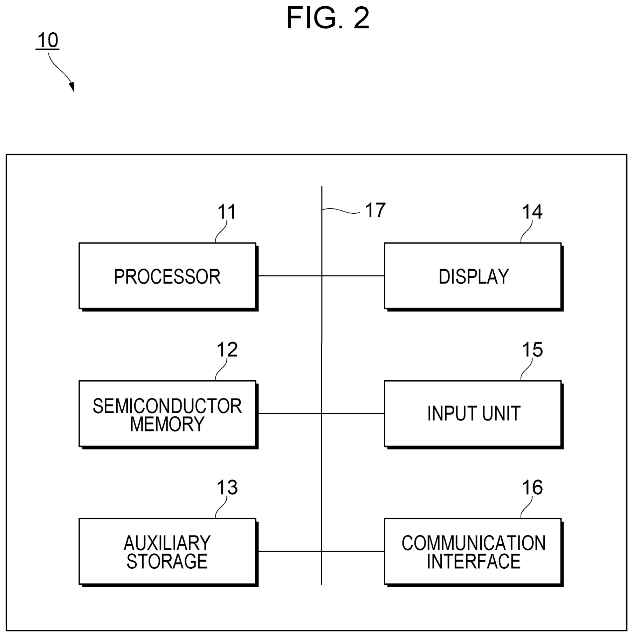

Fig. 2 is a block diagram illustrating an example of the hardware configuration of the controller 10.

The controller 10 includes a processor 11, a semiconductor memory 12, an auxiliary storage 13, a display 14, an input unit 15, and a communication interface 16. These devices are connected to each other via a signal line 17, such as a bus or another line.

The processor 11 is a device that implements various functions by means of the execution of a program. The processor 11 is an example of a first processor.

The semiconductor memory 12 may include a read only memory (ROM) storing a unified extensible firmware interface (UEFI), for example, and a random access memory (RAM) used as a work area for the processor 11.

The processor 11 and the semiconductor memory 12 function as a computer.

The auxiliary storage 13 is constituted by a hard disk drive or a semiconductor storage, for example. In the auxiliary storage 13, a program and various items of data are stored. This program is used as a generic term for an operating system (OS) and application programs. In the auxiliary storage 13, a program for displaying the appearance of color and/or texture of a printed material as a three-dimensional preview is stored.

As the display 14, a liquid crystal display or an organic electroluminescence (EL) display, for example, is used. On the display 14, a rendering image (hereinafter called a preview image) that reproduces how the color and/or the texture of a printed material to be generated from print data would appear is displayed.

The input unit 15 includes a mouse and operation buttons, for example. The input unit 15 is used for providing an instruction in response to a program executed by the processor 11.

The communication interface 16 is an interface for communicating with the image forming apparatus 20. The Ethernet, for example, is used for the communication interface 16.

### (Hardware Configuration of Image Forming Apparatus)

The image forming apparatus 20 includes a processor, a ROM, a RAM used as a work area for the processor, an auxiliary storage, an image processing unit, a print unit, and a communication interface. These devices are connected to each other via a bus or another signal line. The image forming apparatus 20 also includes a mechanism for storing sheets and a mechanism for transporting sheets.

The processor controls the operations of the devices by executing a program including an OS and firmware and outputs a printed material based on print data.

The auxiliary storage is constituted by a hard disk drive or a semiconductor storage, for example. In the auxiliary storage, print data received from the controller 10 is stored.

If the received print data is PDL data, the image processing unit converts the PDL data into bitmap data. This processing is called rasterize processing. The print unit is a mechanism that forms an image on a sheet by using a printing method, such as the electrophotographic system, inkjet method, and offset printing.

The communication interface is used for communicating with the controller 10.

### (Functional Configuration of Controller)

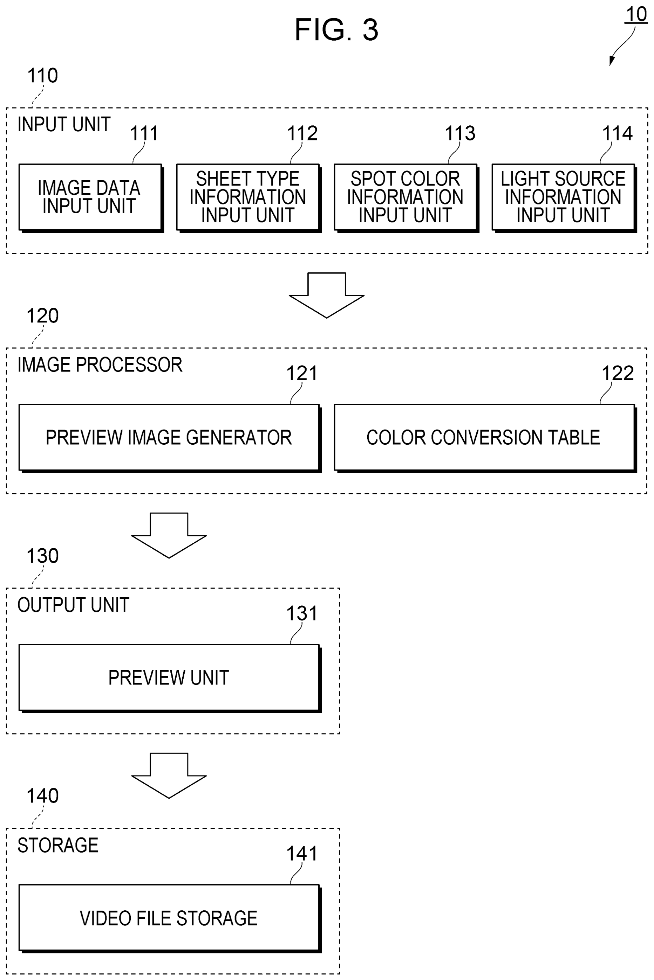

Fig. 3 is a block diagram illustrating an example of the functional configuration of the controller 10. The functional modules shown in Fig. 3 are implemented through the execution of the program for reproducing the appearance of color and/or texture of a printed material.

The functional modules of the controller 10 includes an input unit 110, an image processor 120, an output unit 130, and a storage 140.

The input unit 110 is a functional module that receives the input of conditions for generating a printed material.

The input unit 110 includes an image data input unit 111, a sheet type information input unit 112, a spot color information input unit 113, and a light source information input unit 114.

The image data input unit 111 is a functional module that receives the input of image data. The image data includes print data indicating color information, for example. In the exemplary embodiment, it is assumed that bitmap data is used as print data.

The sheet type information input unit 112 is a functional module that receives the input of information on the type of medium used for printing. In the exemplary embodiment, it is assumed that paper is used as a medium.

The sheet type information includes information on processed paper, for example. The sheet type information also includes information on the sheet size and the color tone.

The spot color information input unit 113 is a functional module that receives the input of information on a spot color.

The light source information input unit 114 is a functional module that receives the input of information on a light source. The light source information includes information on the position, color, and type of light source, for example. In the exemplary embodiment, it is assumed that an illumination light source is used as a light source.

The image processer 120 is a functional module that generates a preview image which reproduces how the color and/or the texture of a printed material would appear when the printed material is observed in various directions.

The image processor 120 includes a preview image generator 121. The preview image generator 121 generates a preview image by referring to a color conversion table 122. In the exemplary embodiment, the preview image generator 121 generates a preview image as video data. Alternatively, the preview image generator 121 may generate a preview image as still image data.

The color conversion table 122 records how the color appears in accordance with the relationships between the position of a light source, the observation direction, and the orientation of a printed material.

The output unit 130 is a functional module that outputs a preview generated by the preview image generator 121. The output unit 130 includes a preview unit 131. The preview unit 131 is a functional module that displays a generated preview image on the display 14 (see Fig. 2). The preview unit 131 also has a function of outputting a generated preview image to the auxiliary storage 13 (see Fig. 2).

The storage 140 is a functional module that stores a generated preview image in the auxiliary storage 13. In the auxiliary storage 13, an image file corresponding to a preview image is stored. A region where a video file is stored is called a video file storage 141.

### (Display Processing of Preview Image)

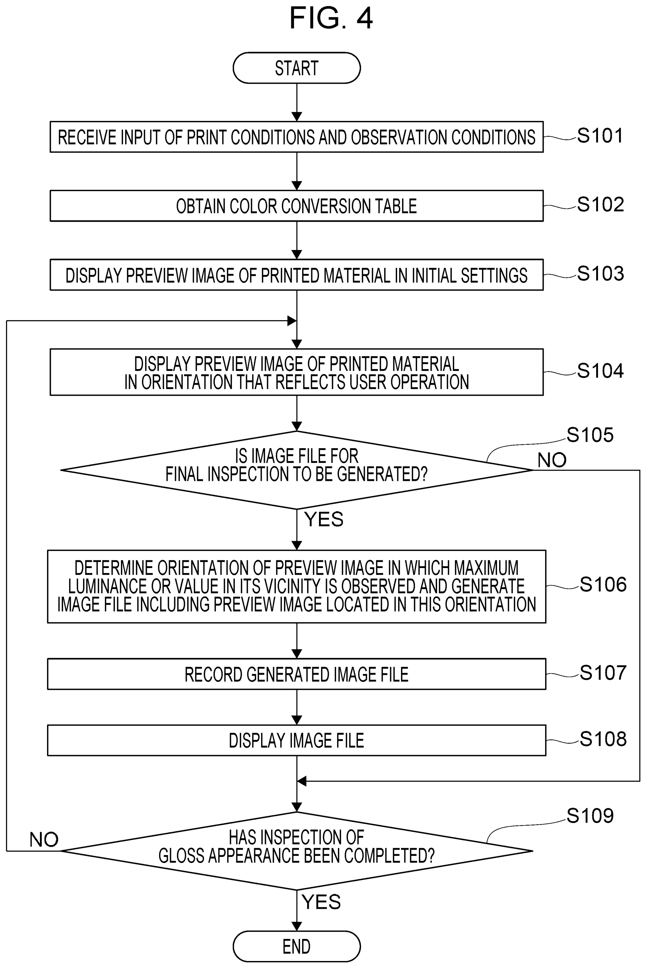

Fig. 4 is a flowchart illustrating an example of display processing of a preview image. "S" in Fig. 4 stands for a step.

In step S101, the controller 10 (see Fig. 1) receives the input of print conditions and observation conditions. The print conditions include various items of data and information received by the input unit 110 (see Fig. 3).

The print conditions include information on image data, sheet type, and spot color, for example. The observation conditions include information on the positions of a light source, a printed material, and a camera in a simulation space and observation environments.

In the exemplary embodiment, the direction in which a printed material is observed in a simulation space is called a specific direction. The specific direction is a direction from the observation position of a printed material (camera position) toward the center position of the printed material, for example. In the exemplary embodiment, the camera position is assumed as the position of a user viewing the display 14.

Then, in step S102, the controller 10 obtains the color conversion table 122 (see Fig. 3).

Then, in step S103, the controller 10 displays a preview image of the printed material in the initial settings. The initial settings are provided by the print conditions and the observation conditions. In the exemplary embodiment, the observation conditions also include the initial orientation of a printed material in the preview image. In the exemplary embodiment, the initial orientation of a print sheet is set so as to directly face the camera.

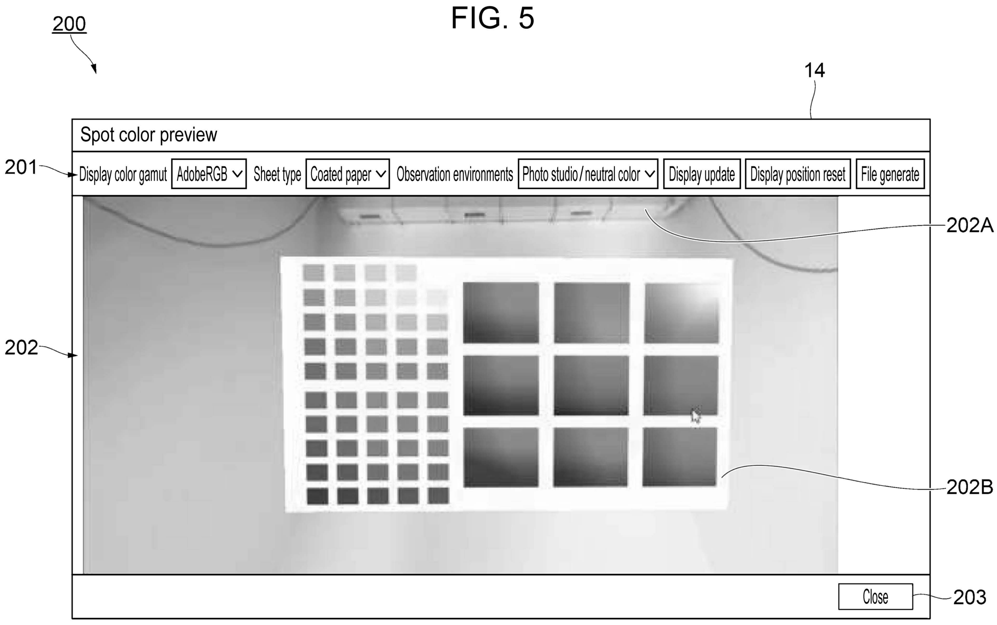

Fig. 5 illustrates a display example of a preview image in the initial orientation.

A preview screen 200 includes a menu field 201, an image field 202, and a "close" button 203.

In the preview screen 200 shown in Fig. 5, "spot color preview" is displayed as a title.

In the menu field 201, a "display color gamut" field, a "sheet type" field, an "observation environments" field, a "display update" button, a "display position reset" button, and a "file generate" button are placed.

In the example in Fig. 5, the display color gamut is set to "Adobe RGB". The sheet type is set to "coated paper". The observation environments are set to "photo studio/neutral color".

In the image field 202, a simulation image is displayed. In the example in Fig. 5, in the image field 202, a light source 202A installed on the ceiling and a preview image 202B are displayed. The light source 202A is a surface light source having neutral color and is installed on the ceiling.

A line normal to the preview image 202B in the initial orientation and a line normal to the display 14 are parallel to each other. Since the light source 202A is mounted on the ceiling, part of the printed material exhibits a glossy appearance.

When the "close" button 203 is pressed, it is assumed that a user has finished observing the preview image 202B, and the preview screen 200 is closed.

Referring back to Fig. 4, when a printed material in the initial orientation is displayed, the orientation of the printed material in the simulation space can be changed.

In step S104, the controller 10 displays a preview image of the printed material in the orientation that reflects a user operation. Changing of the orientation includes, not only rotating of the preview image around a certain rotational axis, but also a translational movement of the preview image in the simulation space. As the orientation of the preview image of the printed material is changed, the positional relationship of the surface of the printed material to the light source and the observation direction is also changed. As a result, the color and the texture appearing on the preview image are changed.

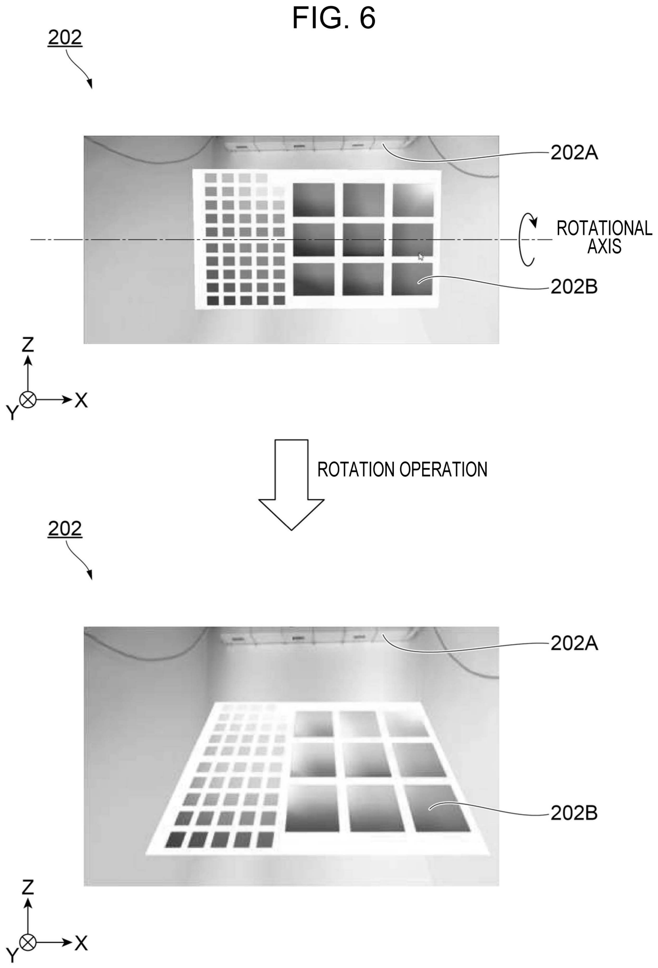

Fig. 6 illustrates how the appearance of the preview image 202B is changed in response to an operation for varying the orientation of the preview image 202B. In Fig. 6, the same elements as those in Fig. 5 are designated by like reference numerals.

The coordinate system shown in Fig. 6 is a coordinate system in a simulation space. The top side and the bottom side of the preview image 202B in the initial orientation are parallel to the X axis, and the left side and the right side are parallel to the Z axis. The depth direction in the plane of the drawing is the Y axis. This coordinate system is also the same as that in a real space where a user viewing the display 14 (see Fig. 2) is present.

In Fig. 6, the preview image 202B is rotated toward the depth side by a user operation. In Fig. 6, because of the perspective effect, the top side of the preview image 202B appears shorter than the bottom side.

After the preview image 202B is rotated, the surface of the printed material is inclined with respect to the light source 202A. As a result, light emitted from the light source 202A and having undergone specular reflection on the print surface can be observed.

The rotated preview image 202B thus exhibits a stronger gloss than that before rotation. In other words, the luminance on the entire surface of the printed material is enhanced. The increased luminance makes the color tone of the printed material appear paler than before rotation. In particular, the luminance of a portion printed with a spot color ink is elevated significantly compared with that before rotation.

Nevertheless, the user is still uncertain whether the printed material exhibits the strongest gloss in the current orientation.

Referring back to Fig. 4, it is assumed that the menu field 201 of the preview screen 200 is operated.

In step S105, the controller 10 determines whether to generate an image file for final inspection. More specifically, the controller 10 determines whether the "file generate" button in the preview screen 200 (see Fig. 5) has been pressed.

If it is found that the "file generate" button in the preview screen 200 has not been pressed (NO in S105), the controller 10 proceeds to step S109.

If it is found that the "file generate" button in the preview screen 200 has been pressed (YES in S105), the controller 10 proceeds to step S106.

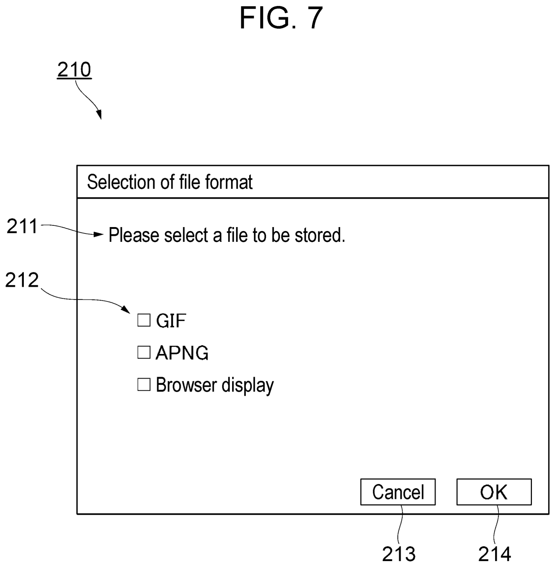

Fig. 7 illustrates an example of a file format selection screen (that is, a selection screen 210) to be displayed after the "file generate" button is pressed.

On the selection screen 210, a description 211, a selection field 212 for the file format, a "cancel" button 213, and an "OK" button 214 are displayed.

In the example in Fig. 7, the description 211 states a message "Please select a file to be stored".

In the selection field 212, three file formats, "GIF", "APNG", and "Browser display", are presented.

When the "cancel" button 213 is pressed, the selection of the file format is canceled. When the "OK" button 214 is pressed, the selected file format is set.

Referring back to Fig. 4, if the result of step S105 is YES, the controller 10 proceeds to step S106 to determine the orientation of a preview image in which the maximum luminance or a value in its vicinity is observed and then generates an image file including a preview image positioned in this orientation.

In the exemplary embodiment, as the orientation of the preview image 202B suitable for final inspection, the orientation of the preview image 202B in which the maximum luminance or a value in its vicinity is observed is assumed. The orientation of a preview image in which the maximum luminance or a value in its vicinity is observed is an example of a specific orientation.

In the exemplary embodiment, the maximum luminance is defined as the maximum luminance appearing in the preview image 202B, for example. There are various approaches to determining the orientation in which the maximum luminance or a value in its vicinity is observed (that is, the specific orientation). Specific examples of the approach to determining the specific orientation will be discussed later.

Step S106 is an example of a control operation for determining the specific orientation that significantly changes parameters regarding the appearance of color and/or texture of a simulation image.

The parameters include the rotational axis used for varying the orientation of the preview image 202B (that is, the printed material in the simulation space), the rotation range (that is, the rotation angle), and a vector for translating the position coordinates. The parameters may also include the light source position and the observation position (observation direction) in the simulation space.

Subsequently, in step S107, the controller 10 records the generated image file.

Then, in step S108, the controller 10 displays the image file. The displayed image is an example of an image at least including a simulation image corresponding to the selected specific orientation.

Then, in step S109, the controller 10 determines whether the inspection of the gloss appearance has been completed. For example, the controller 10 determines whether the "close" button 203 (see Fig. 5) has been pressed.

If no operation for providing an instruction to finish the inspection of the gloss appearance is detected (NO in step S109), the controller 10 returns to step S104.

If an operation for providing an instruction to finish the inspection of the gloss appearance is detected (YES in step S109), the controller 10 completes the series of processing.

### (Approach to Determining Specific Orientation)

Examples of the approach to determining the specific orientation, that is, the orientation in which the maximum luminance or a value in its vicinity is observed, will be explained below.

The following examples of the approach to determining the specific orientation are selectively employed in accordance with the features of a glossy texture portion contained in a printed material and the observation environments.

### (Approach 1)

In approach 1, it is assumed that the entirety of a printed material has a glossy appearance. Approach 1 is an example of a method for determining the rotation range in which a printed material to be observed (that is, a preview image) exhibits the strongest glossy appearance when the printed material is rotated. In approach 1, the rotational axis used for inclining a printed material is set to be parallel to the short sides of the printed material and to pass through the center position of the printed material.

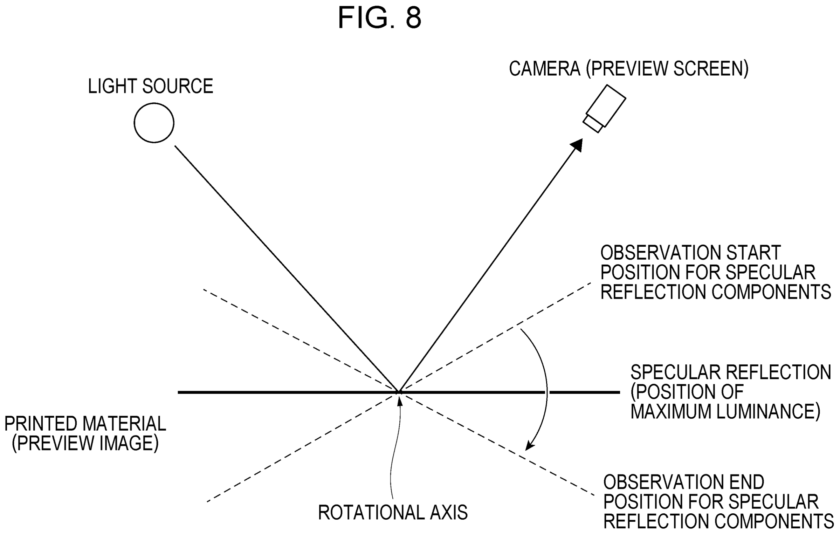

Fig. 8 is a schematic view illustrating the specific orientation in which the maximum luminance or a value in its vicinity is observed. In Fig. 8, the printed material is seen from its long side. The depth direction in the plane of the drawing is parallel to the short sides of the printed material.

In the example in Fig. 8, the printed material (that is, a preview image) is placed horizontally, that is, it is placed in parallel to the floor surface in a photo studio, for example. A light source and a camera (preview screen) are positioned obliquely above the surface of the printed material. The light source and the camera (preview screen) are disposed horizontally symmetrically with respect to the rotational axis.

This positional relationship is based on the angle at which light having undergone specular reflection (regular reflection) on the surface of the printed material enters the camera. The specific orientation in which the maximum luminance or a value in its vicinity is observed is defined as the orientation of the printed material that is being rotated from the position at which the camera starts observing specular reflection components (that is, the observation start position) until the position at which the camera finishes observing specular reflection components (that is, the observation end position).

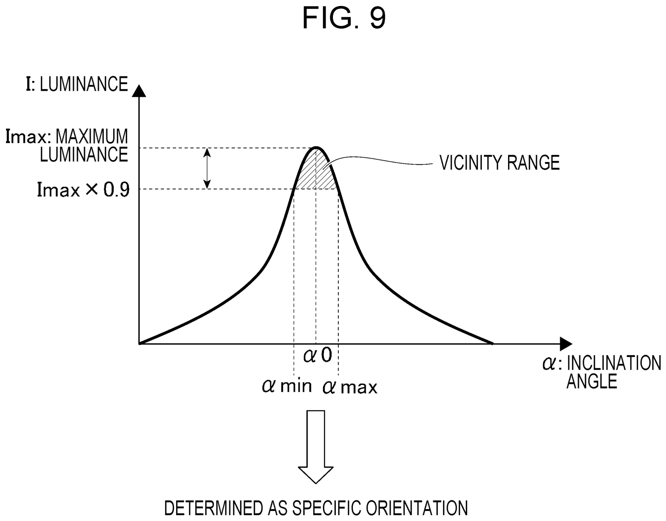

Fig. 9 is a graph illustrating the relationship between the luminance I and the inclination angle α when a printed material (preview image) is rotated around the rotational axis. In Fig. 9, the horizontal axis indicates the inclination angle α, and the vertical axis indicates the luminance I.

The luminance I represents the intensity of reflected light detected by a camera in a simulation space. As discussed above, the preview image 202B (see Fig. 5) captured by the camera is displayed on the display 14 (see Fig. 5).

In Fig. 9, 90% of the maximum luminance Imax (that is, Imax × 0.9) is regarded as the lower limit value of the vicinity range of the maximum luminance Imax. However, the lower limit value is not limited to 90% of the maximum luminance Imax, and may be 95% or 80% of the maximum luminance Imax, for example.

In the example in Fig. 9, the inclination angle corresponding to the maximum luminance Imax is set to the reference inclination angle α0. The direction in which the inclination angle becomes smaller than the reference inclination angle α0 is set to a negative direction, while the direction in which the inclination angle becomes larger than the reference inclination angle α0 is set to a positive direction.

With the above-described settings, the controller 10 determines the orientation of the printed material in the rotation range from the minimum inclination angle αmin in the negative direction to the maximum inclination angle αmax in the positive direction to be the specific orientation.

As illustrated in Fig. 9, the vicinity range that provides the specific orientation of the preview image 202B is given by the inclination angle in the positive direction and that in the negative direction with respect to the reference inclination angle α0.

In the example in Fig. 9, the rotation angle determined by the reference inclination angle α0 and the minimum inclination angle αmin is the same as that determined by the reference inclination angle α0 and the maximum inclination angle αmax. However, the rotation angle in the negative direction and that in the positive direction with respect to the reference inclination angle α0 may be different from each other.

### (Approach 2)

In approach 1, a case in which the entirety of a printed material has a glossy appearance is examined. There may be a case, however, in which only part of a printed material has a glossy texture portion. In this case, the glossy texture portion is set to a target region and a specific orientation is determined for the target region.

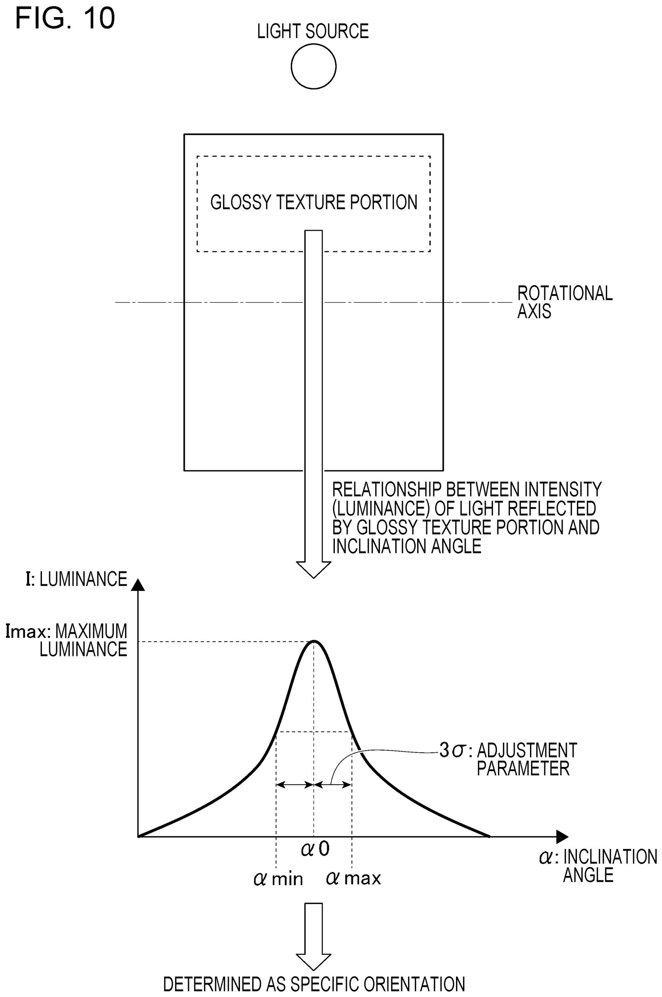

Fig. 10 is a schematic view and a graph illustrating the approach to determining a specific orientation when a glossy texture portion is included only in part of a printed material.

In the example in Fig. 10, a glossy texture portion is included only in the vicinity of the top side of a printed material. In approach 2, therefore, attention will be paid to the relationship between the intensity (luminance) of light reflected by the glossy texture portion and the inclination angle.

In Fig. 10, the rotation range (αmin, αmax) corresponding to the specific orientation is determined based on a parameter σ, which is obtained by converting an index representing the surface roughness of the glossy texture portion into the angle.

The indices representing the surface roughness include the arithmetic mean roughness, maximum height, and ten-point mean roughness, for example. There are various approaches to calculating the parameter σ from the index representing the surface roughness.

For example, the inclination angle (α0+σ) obtained by adding the adjustment parameter σ corresponding to the surface roughness to the reference inclination angle α0 is set to the maximum inclination angle αmax.

The inclination angle (α0-σ) obtained by subtracting the adjustment parameter σ corresponding to the surface roughness from the reference inclination angle α0 is set to the minimum inclination angle αmin.

Then, the rotation angle from the minimum inclination angle αmin to the maximum inclination angle αmax is determined as the specific orientation.

Nevertheless, the rotation angle that provides the specific orientation may be derived by another approach. For example, the maximum inclination angle αmax may be calculated by adding 3σ to the reference inclination angle α0. The minimum inclination angle αmin may be calculated by subtracting 3σ from the reference inclination angle α0.

The approach to determining the specific orientation by using the surface roughness (approach 2) is also applicable to a case in which the entirety of a printed material has a glossy appearance as in approach 1.

### (Approach 3)

The rotation angle that provides the specific orientation may also be determined simply by adding or subtracting the adjustment angle (30°, for example) to or from the reference inclination angle α0.

For example, the maximum inclination angle αmax may be defined as (α0+Δα), which is obtained by adding the adjustment angle Δα (30°, for example) to the reference inclination angle α0.

For example, the minimum inclination angle αmin may be defined as (α0-Δα), which is obtained by subtracting the adjustment angle Δα (30°, for example) from the reference inclination angle α0.

The adjustment angle Δα may be an angle other than 30°, such as 10° or 20°.

Approach 3 is also applicable to a case in which the entirety of a printed material has a glossy appearance as in approach 1.

### (Approach 4)

In approach 4, the inclination angle at which a variation in the luminance I becomes negligible in response to a change in the inclination angle α is set to the minimum inclination angle αmin.

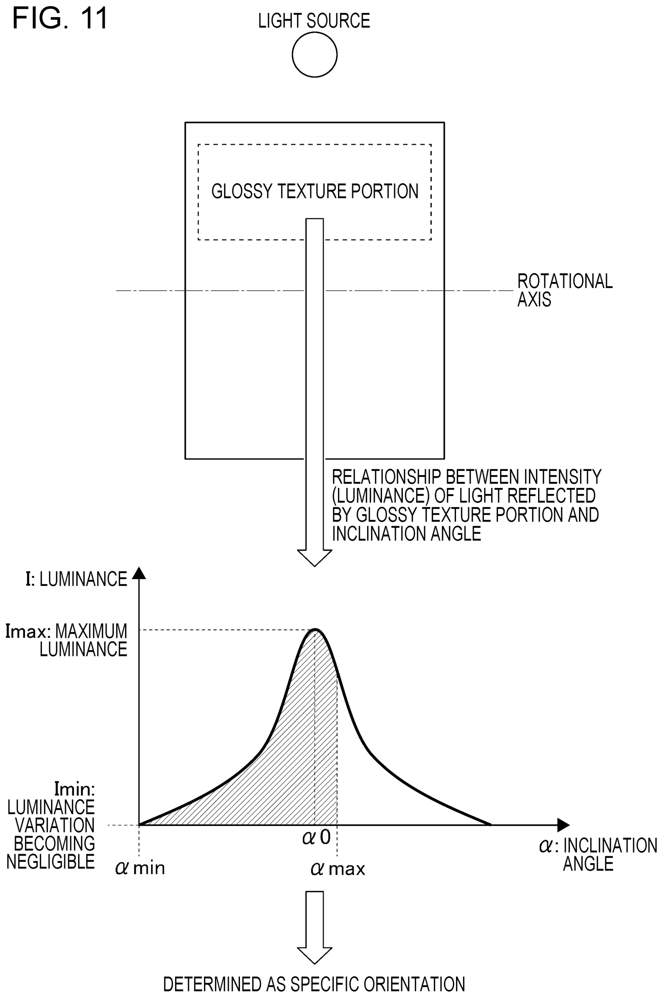

Fig. 11 is a schematic view and a graph illustrating another approach to determining a specific orientation when a glossy texture portion is included only in part of a printed material.

In the above-described approach 2 and approach 3, the angle between the reference inclination angle α0 and the maximum inclination angle αmax is equal to the angle between the reference inclination angle α0 and the minimum inclination angle αmin.

In approach 4, however, attention is paid to a change in the dynamic range of the luminance I.

In the example in Fig. 11, the inclination angle at which the luminance variation becomes negligible (that is, the minimum luminance Imin) in response to a change in the inclination angle is set to the minimum inclination angle αmin in the negative direction. In other words, when a printed material (preview image) is continuously inclined in the negative direction, the first inclination angle at which the luminance variation becomes negligible is set to the minimum inclination angle αmin. The state in which the luminance variation becomes negligible is a state in which the luminance variation is a lower than a threshold, for example.

An example of the minimum luminance Imin in the state in which the luminance variation becomes negligible is a case in which the luminance becomes 0.

The minimum inclination angle αmin may be defined as the angle corresponding to the minimum luminance Imin.

The maximum inclination angle αmax, which is the angle inclined from the reference inclination angle α0 in the positive direction, may be the angle corresponding to the luminance expressed by (Imax-Imin) × 0.8 + Imin.

Approach 4 is also applicable to a case in which the entirety of a printed material has a glossy appearance as in approach 1.

### (Approach 5)

In approach 2, the angle range corresponding to the specific orientation is determined based on the parameter σ, which is obtained by converting an index representing the surface roughness of a glossy texture portion into the angle.

In approach 5, attention is paid to the relationship between the luminance I and the inclination angle α in which the surface roughness is reflected, and the angle range corresponding to the specific orientation is determined based on this relationship. The application of approach 5 is not limited to a case in which a glossy texture portion is included only in part of a printed material. Approach 5 is also applicable to a case in which the entirety of a printed material has a glossy appearance as in approach 1.

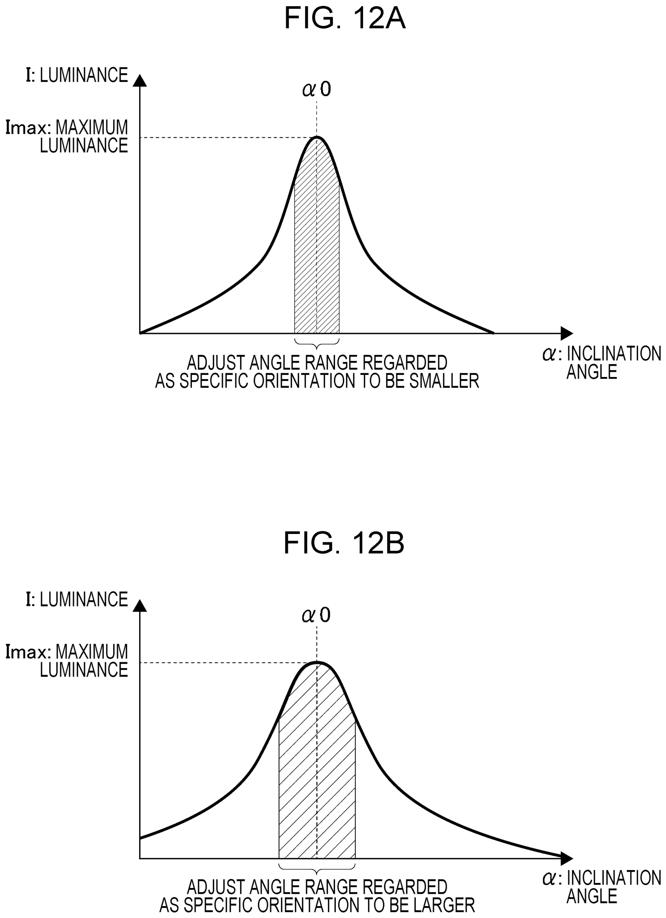

Figs. 12A and 12B are graphs illustrating that the rotation range regarded as a specific orientation becomes different in accordance with the waveform of the luminance I which varies in response to the inclination angle α.

Fig. 12A illustrates the relationship between the inclination angle α and the luminance I when the surface roughness is small. Small surface roughness means that the surface is smooth. Accordingly, the angle range in which higher luminance levels are observed (that is, specular reflection is observed) becomes relatively narrow.

In this case, the angle range regarded as the specific orientation is adjusted to be smaller than that when the surface roughness is large. The angle range shown in Fig. 12A is an example of a first angle range. The distribution shape of the luminance in Fig. 12A is an example of a first shape.

Fig. 12B illustrates the relationship between the inclination angle α and the luminance I when the surface roughness is large. Large surface roughness means that the distribution of the lines normal to micro surfaces is large and is thus less biased in a certain direction, the irregularities of the surface are large, or the area of the portions with irregularities is large. In this case, the angle range in which higher luminance levels are observed (that is, specular reflection is observed) becomes relatively wide. Accordingly, the angle range regarded as the specific orientation is adjusted to be larger than that when the surface roughness is small.

The angle range shown in Fig. 12B is an example of a second angle range. The distribution shape of the luminance in Fig. 12B is an example of a second shape.

As illustrated in Figs. 12A and 12B, the second angle range is wider than the first angle range. The second shape is broader than the first shape.

A state in which the surface roughness is relatively small is an example of a first roughness. A state in which the surface roughness is relatively large (larger than the first roughness) is an example of a second roughness.

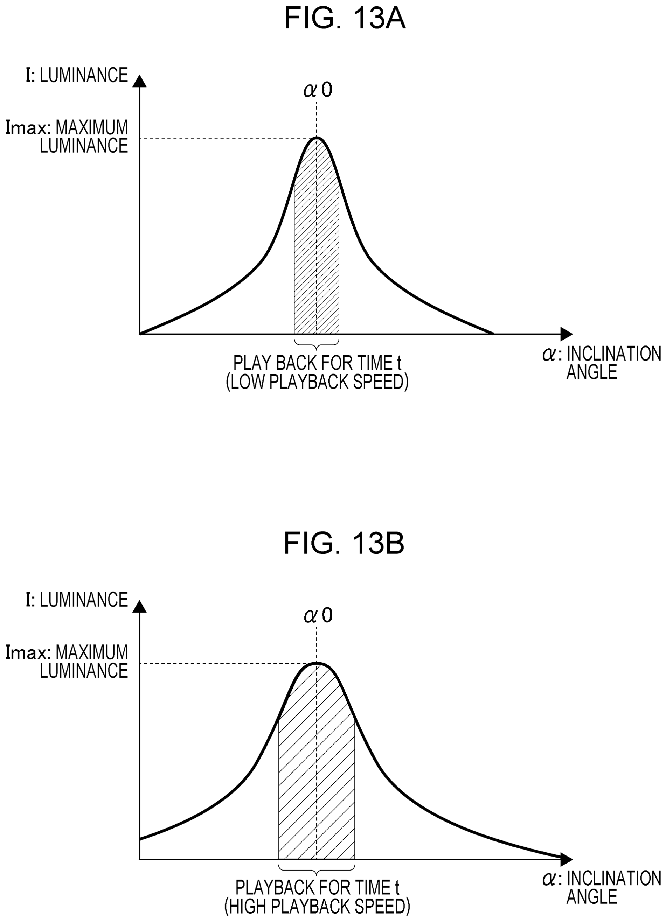

Figs. 13A and 13B are graphs illustrating an example of playback control for an image file based on the surface roughness.

The playback control illustrated in Figs. 13A and 13B is executed in step S108 in Fig. 4.

If information on the surface roughness can be obtained, approach 5 may be combined with the above-described approaches 1 through 4 or another approach, which will be discussed later.

In the example in Figs. 13A and 13B, the time for playing back the image file corresponding to the angle range regarded as the specific orientation is fixed regardless of the surface roughness. In other words, the playback speed (second speed) of an image file having a large surface roughness is faster than the playback speed (first speed) of an image file having a small surface roughness.

For example, when the surface roughness is small, the distribution shape of the luminance (first shape) becomes steep, as shown in Fig. 13A. This means that only a slight change in the inclination angle considerably alters the luminance. This is not suitable for observing the appearance of gloss. Hence, when the surface roughness is small, the playback speed is set to be lower than that when the surface roughness is large so as to make it easy to observe the gloss appearance. In other words, the amount of change in the inclination angle per unit time is controlled to be smaller than that when the surface roughness is large.

In contrast, when the surface roughness is large, the distribution shape of the luminance (second shape) becomes gentle, as shown in Fig. 13B. This means that a slight change in the inclination angle does not significantly alters the luminance. This is favorable for observing the appearance of gloss. Hence, when the surface roughness is large, the playback speed is set to be higher than that when the surface roughness is small. In other words, the amount of change in the inclination angle per unit time is controlled to be larger than that when the surface roughness is small.

In Figs. 13A and 13B, the playback time is fixed regardless of the surface roughness level. However, the playback time may be varied in accordance with the surface roughness level. For example, the playback time for an image file having a small surface roughness may be set to ten seconds, while the playback time for an image file having a large surface roughness may be set to five seconds.

### (Approach 6)

In the example in Fig. 10 used for explaining approach 2, the glossy texture portion extends from the left side to the right side of a printed material.

In actuality, however, a glossy texture portion may be biased in part of a printed material. In this case, if the orientation of the printed material is not inclined in an appropriate direction with respect to a light source and a camera, light having undergone specular reflection on the glossy texture portion may not enter the camera. That is, if a printed material is inclined by always using the same rotational axis, the gloss appearance may not be fully observed.

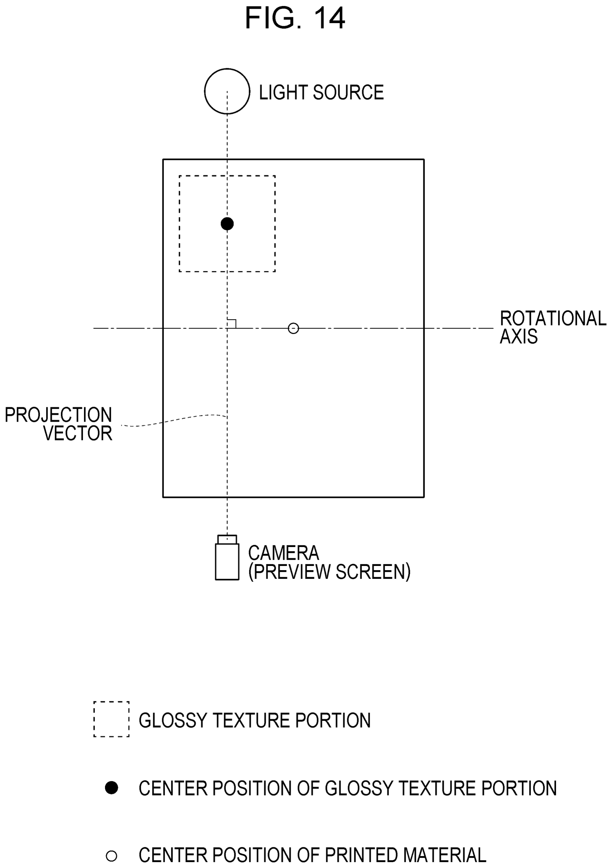

Fig. 14 is a schematic view illustrating an approach to setting the rotational axis in accordance with the positional relationship between a light source and a glossy texture portion. A camera (that is, a preview screen) in a simulation space is positioned on an extension line connecting the light source and the glossy texture portion. This likewise applies to other approaches to setting the rotational axis, which will be discussed later.

In approach 6, the rotational axis for inclining a printed material is set by the following steps.
(1) The position of the center of a glossy texture portion (the intersection point of the center of the width and the center of the height of a printed material, for example) or the position of the centroid of the glossy texture portion is determined. The approach to determining the position of the centroid will be discussed later.
(2) The position of the light source is determined.
(3) A projection vector is calculated by projecting a vector determined by the position of the center or the centroid of the glossy texture portion and the center of the light source onto a plane of the printed material surface. The projection vector is an example of a first line.
(4) A line being perpendicular to the projection vector on the surface of the printed material and passing through the center of the printed material is determined. This line is an example of a second line.
(5) The determined second line is set to the rotational axis.

The rotational axis shown in Fig. 14 is parallel to the short sides and passes through the center of the printed material, as in that obtained by the above-described approaches.

Accordingly, light having undergone specular reflection on the glossy texture portion enters the camera. As a result, while various orientations of the printed material are being controlled, the maximum luminance can be detected by the camera.

If the positional relationship between a glossy texture portion and a light source is different from that shown in Fig. 14, an image exhibiting the maximum gloss luminance is not captured by the camera during the control operation for the orientation of the printed material based on the rotational axis shown in Fig. 14.

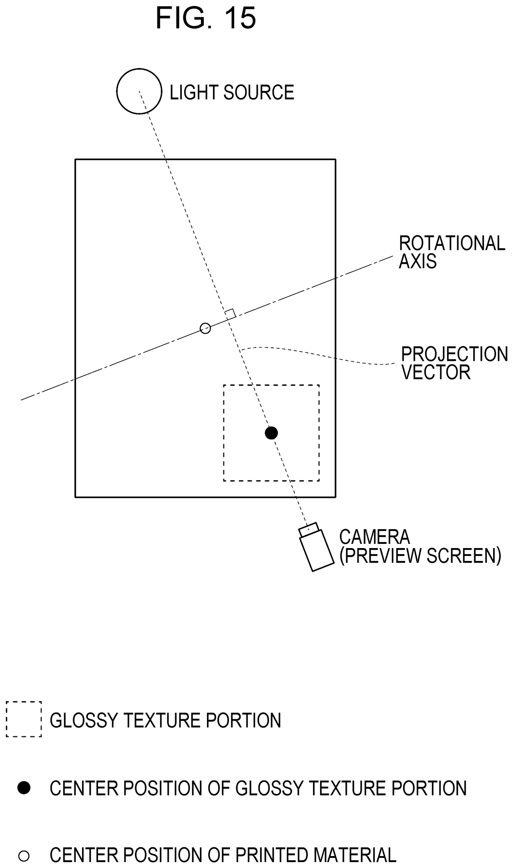

Fig. 15 is a schematic view illustrating another approach to setting the rotational axis in accordance with the positional relationship between a light source and a glossy texture portion.

In the example in Fig. 15, the glossy texture portion is located near the bottom right side of the printed material. Accordingly, even if the orientation of the printed material is controlled based on the rotational axis in Fig. 14, a preview image exhibiting the maximum luminance may not be captured.

However, if the rotational axis is set by the above-described steps (1) through (5), a preview image exhibiting the maximum luminance can be captured.

The centroid of the glossy texture portion described above is calculated by the following steps using the following expressions.

(11) First, by using the special toner configuration, a mask image is generated by replacing all the pixel values greater than 0 by 255. Then, the regions having the pixel value 0 present the position of a glossy texture portion.

(12) Then, the contours of the texture are detected by using an existing contour tracing algorithm, such as "Digital Image Processing (Revised New Edition)" by CG-ARTS (Computer Graphic Arts Society) and "2015, 184-185, ISBN9784903474502" by CG-ARTS.

(13) By inputting the detected contours and the luminance values of the special toner configuration into the following expressions, the centroid coordinates are calculated.
X coordinate of Centroid = Σ (luminance value × X coordinate) / Σ luminance value
Y coordinate of Centroid = Σ (luminance value × Y coordinate) / Σ luminance value

### (Approach 7)

In approach 7, a description will be given of a case in which multiple glossy texture portions are included in a printed material.

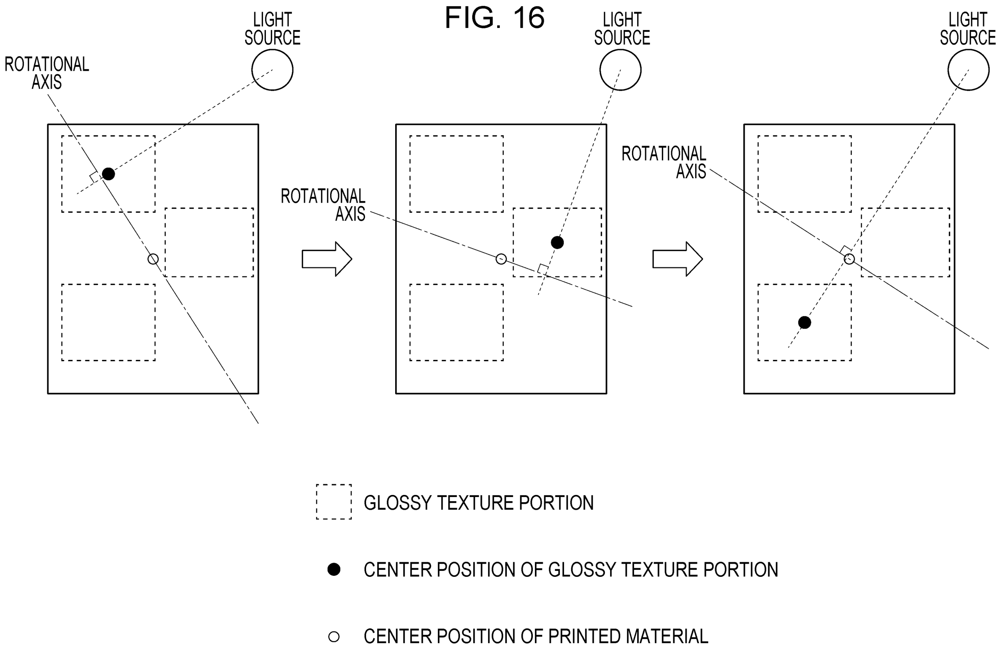

Fig. 16 is a schematic view illustrating an example of the approach to determining specific orientations when three glossy texture portions are included in a printed material.

In the example in Fig. 16, one of the glossy texture portions is placed at the top left corner of the printed material, another one is on the right side of the intermediate portion of the printed material, and the remaining one is at the bottom left corner of the printed material.

In approach 7, the rotational axis is determined for each of the three glossy texture portions by using the method discussed in approach 6. Then, preview images, each of which is positioned in the corresponding specific orientation, are generated one by one. Subsequently, all the preview images are connected to each other to generate one image file.

With this approach, the appearance of gloss can be observed for each of the three glossy texture portions.

### (Approach 8)

With the use of approach 7, regardless of the number of glossy texture portions, an image file including preview images, each of which is positioned in the corresponding specific orientation, can be generated for each glossy texture portion.

In approach 7, the rotational axis is determined for each glossy texture portion and a preview image is captured accordingly. This requires multiple capturing operations and prolongs the overall capturing time.

In approach 8, attention is focused on the position of a texture portion having the largest surface roughness and that of a texture portion having the smallest surface roughness among multiple texture portions, thereby reducing the number of capturing operations. That is, a preview image that allows for the observation of the glossy appearance in all the texture portions is generated by one capturing operation.

The maximum luminance of the texture portion having the smallest surface roughness (first region) is higher than that of the other texture portions.

In contrast, the maximum luminance of the texture portion having the largest surface roughness (second region), that is, the luminance observed in the specific orientation unique to this texture portion, is lower than that of the other texture portions.

The maximum luminance values of the other texture portions in their specific orientations take an intermediate value between those of the above-described two texture portions.

In approach 8, therefore, the texture portion having the largest surface roughness and that having the smallest surface roughness are set to target regions, and the rotational axis is determined based on the two target regions by the following steps.

(21) The position of the center or the centroid of the texture portion having the largest surface roughness is determined.

(22) The position of the center or the centroid of the texture portion having the smallest surface roughness is determined.

(23) A projection vector is calculated by projecting a vector determined by the positions of the centers or the centroids of the above-described two texture portions onto a plane of the printed material surface. The projection vector is an example of a third line.

(24) A line being perpendicular to the projection vector on the surface of the printed material and passing through the center of the printed material is determined. This line is an example of a fourth line.

(25) The determined fourth line is set to the rotational axis.

The following step may be added.

(26) The position of the light source or the position of the printed material may be translated in parallel to the rotational axis so that light from the light source is reflected on the center of the printed material during its rotation.

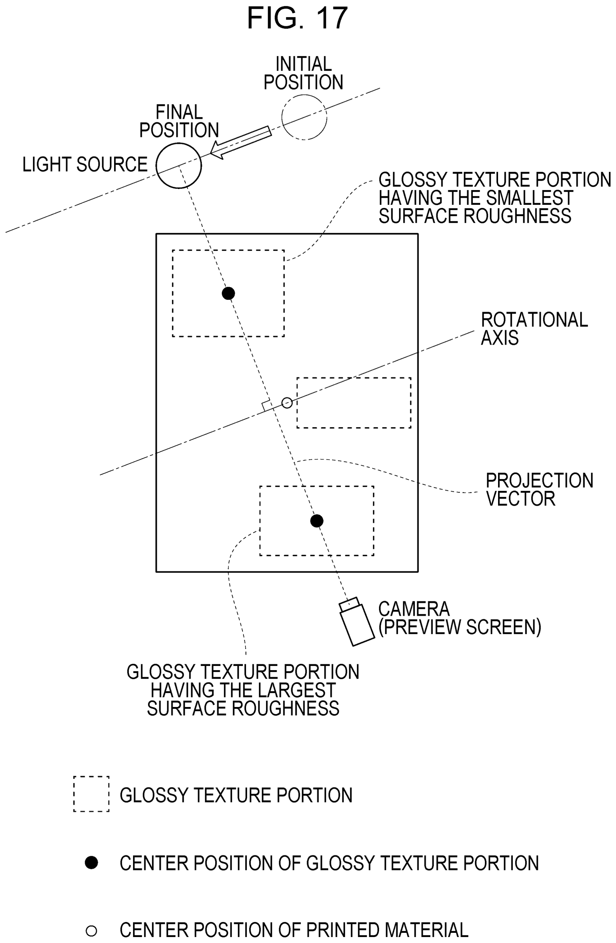

Fig. 17 is a schematic view illustrating an example of setting of the rotational axis and the translational movement of the light source in approach 8.

In Fig. 17, the initial position of the light source is indicated by the long dashed double-dotted line.

In the example in Fig. 17, as in approach 7, the printed material includes three glossy texture portions. Among the glossy texture portions, the texture portion having the smallest surface roughness is placed at the top left corner of the printed material, while the texture portion having the largest surface roughness is placed below the central portion of the printed material.

In this case, the projection vector passing through the center or the centroid of the texture portion at the top left corner and that of the texture portion below the central portion, that is, the third line, is calculated.

Then, a line being perpendicular to the third line and passing through the center of the printed material is set as the rotational axis.

After the rotational axis is set, a preview image is captured while the printed material is being rotated around the rotational axis. The inclination angle is determined based on the relationship with the rotational axis by the above-described calculation method, for example.

The positional relationships between the light source and the target regions are not taken into account in the approach to setting the rotational axis explained in steps (21) through (25). In some target regions, the glossy appearance may not be fully observed. To address this issue, if a predetermined condition is satisfied, the position of the light source or the position of the printed material is translated in parallel to the rotational axis while the preview image is being captured (that is, while the printed material is being rotated), as discussed in step (26).

For example, if the intersection point between the projection vector calculated in step (23) and the rotational axis set in step (25) is separated from the center position of the printed material by a predetermined distance or greater, the translational movement of the light source or the printed material is additionally performed. For example, the printed material is translated in a direction in which the projection vector approaches the center position of the printed material from the position of the printed material at the start of its rotation. Then, a preview image can be generated in which the center and its vicinity of the printed material are illuminated.

### (Approach 9)

When a printed material includes multiple glossy texture portions, the rotational axis is set so that the gloss is obtained individually for each texture portion in approach 7 and the gloss is obtained collectively for all the texture portions in approach 8.

There may be a case, however, in which a user wants to check the gloss only for one or multiple specific texture portions.

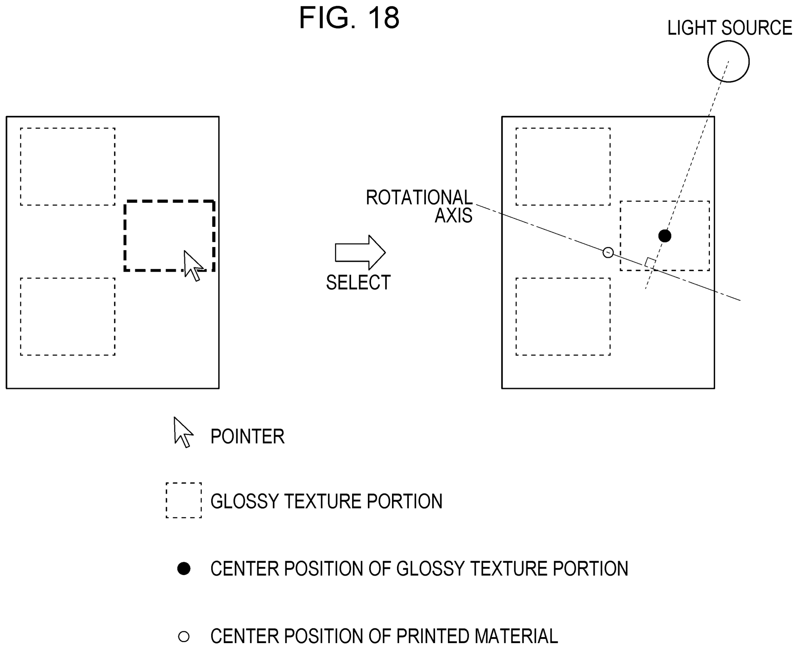

Fig. 18 is a schematic view illustrating an example of the approach to determining the rotational axis dedicated to the use of a texture portion selected by a user.

In the example in Fig. 18, as in approach 7, the printed material includes three glossy texture portions.

In Fig. 18, among the three texture portions, the texture portion located in the middle is selected with a pointer and is set as a target portion to be observed.

In this case, a preview image of the printed material is captured by using the rotational axis determined for this selected texture portion.

### (Approach 10)

A glossy texture portion may exhibit anisotropy. It is thus desirable to check the appearance of gloss in multiple directions.

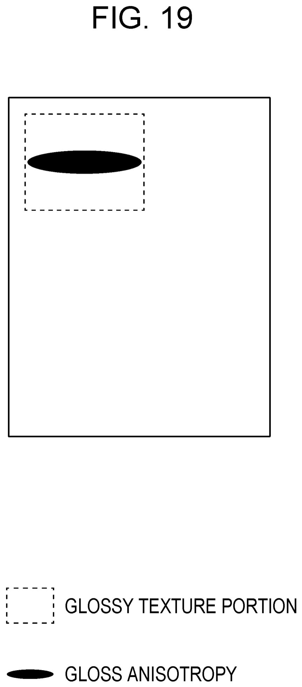

Fig. 19 is a schematic view illustrating an example of a printed material including a texture portion which exhibits anisotropic gloss. In the example in Fig. 19, a glossy texture portion is placed at the top left corner of the printed material. In Fig. 19, anisotropy is represented by an elliptical shape. In this example, the major axis of the ellipse is parallel to the short sides of the printed material, while the minor axis of the ellipse is parallel to the long sides of the printed material.

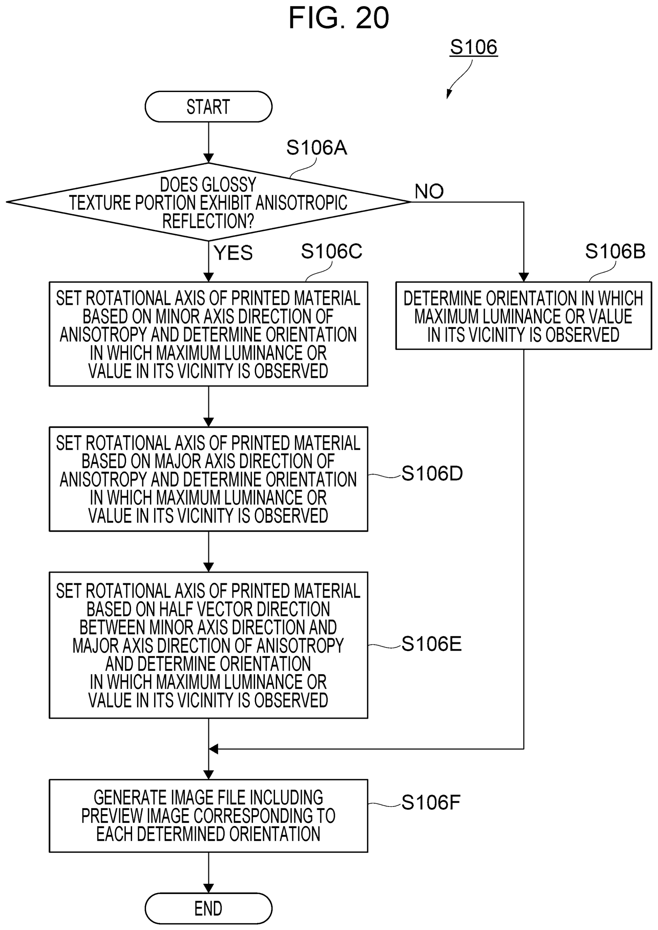

Fig. 20 is a flowchart illustrating approach 10. The processing shown in Fig. 20 corresponds to the internal operation of step S106 in Fig. 4.

First, in step S106A, the controller 10 determines whether a glossy texture portion exhibits anisotropic reflection.

If no anisotropic reflection is observed (NO in step S106A), the controller 10 proceeds to step S106B to determine the orientation in which the maximum luminance or a value in its vicinity is observed. To determine the orientation, any of the above-described approaches 1 through 9 can be employed.

Then, in step S106F, the controller 10 generates an image file including a preview image corresponding to the determined orientation.

If anisotropic reflection is observed (YES in step S106A), the controller 10 proceeds to step S106C to set the rotational axis of the printed material based on the minor axis direction of the anisotropy and to determine the orientation in which the maximum luminance or a value in its vicinity is observed.

Subsequently, in step S106D, the controller 10 sets the rotational axis of the printed material based on the major axis direction of the anisotropy and determines the orientation in which the maximum luminance or a value in its vicinity is observed.

Then, in step S106E, the controller 10 sets the rotational axis of the printed material based on a half vector direction between the major axis direction and the minor axis direction of the anisotropy and determines the orientation in which the maximum luminance or a value in its vicinity is observed.

Then, in step S106F, the controller 10 generates an image file including preview images corresponding to the determined orientations.

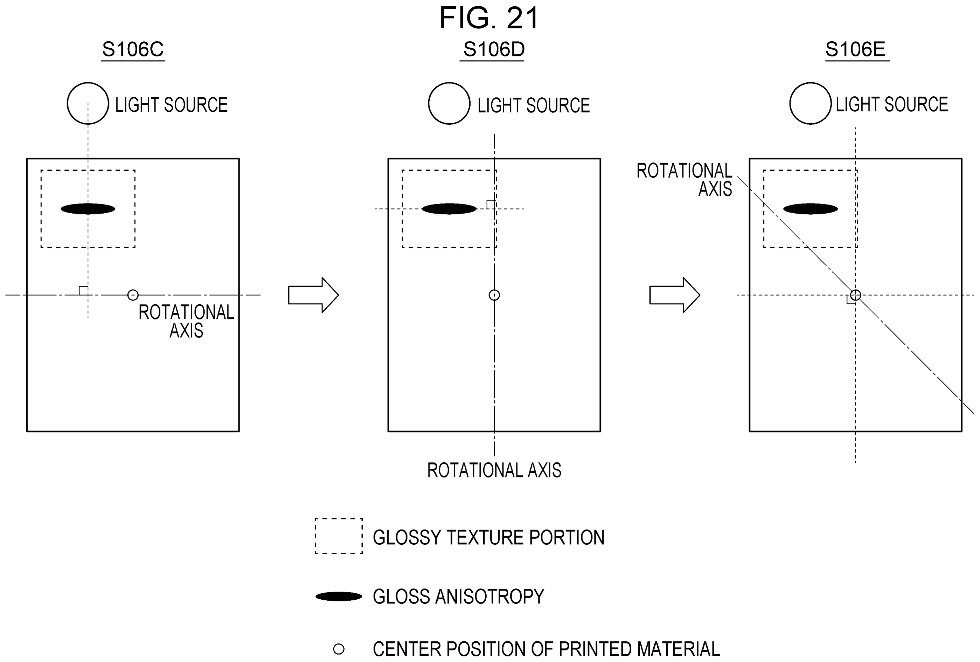

Fig. 21 is a schematic view illustrating examples of setting of the rotational axis when a texture portion exhibits anisotropic gloss. Step numbers in Fig. 21 correspond to those in Fig. 20.

In step S106C, the rotational axis is set in a direction perpendicular to the minor axis of the anisotropy.

In step S106D, the rotational axis is set in a direction perpendicular to the major axis of the anisotropy.

In step S106E, the rotational axis is set in parallel to the half vector direction between the major axis and the minor axis of the anisotropy.

In each of steps S106C through 106E, the rotational axis is set to pass through the center position of the printed material.

Instead of setting the rotational axis based on the minor axis, the major axis, and the half vector, the position of the light source may be set based on the rotational axes determined from the minor axis, the major axis, and the half vector, and then, a preview image may be captured.

To set the position of the light source, a projection vector, which is obtained by projecting a vector determined by the center or the centroid of the glossy texture portion and the position of the light source onto a plane of the printed material surface, is used.

For example, the light source is shifted to the position at which the major axis of the anisotropy and the projection vector coincide with each other, and then, a preview image is captured. Subsequently, the light source is shifted to the position at which the minor axis of the anisotropy and the projection vector coincide with each other, and then, a preview image is captured. Ultimately, the light source is shifted to the position at which a half vector determined by the major axis and the minor axis of the anisotropy and the projection vector coincide with each other, and then, a preview image is captured. The position of the camera is also shifted in synchronization with the movement of the light source.

### (Interim Conclusion)

The use of the controller 10 makes it possible to display a preview image corresponding to the orientation of a printed material that allows a user to check the appearance of gloss (that is, corresponding to the specific orientation). This enables the user to readily check the gloss appearing in the printed material before printing.

Additionally, an image file including the generated preview image is stored. This image file may be distributed to clients, for example. This enables a client who does not have the printed material at hand to check the gloss.

### (Other Exemplary Embodiments)

(1) The exemplary embodiment has been described above, but the scope of the disclosure is not limited to this exemplary embodiment. Various modifications and improvements may be made to the above-descried exemplary embodiment, and examples obtained by such modifications and improvements are also encompassed in the disclosure.
(2) In the above-described exemplary embodiment, when a printed material includes multiple glossy texture portions, the rotational axis is set for each texture portion, as in approach 7, and a preview image corresponding to the determined specific orientation is generated.

In this case, if the same rotational axis can be used for multiple texture portions, the largest rotation angle range that covers the ranges corresponding to the specific orientations for the individual texture portions can be used for capturing a preview image.

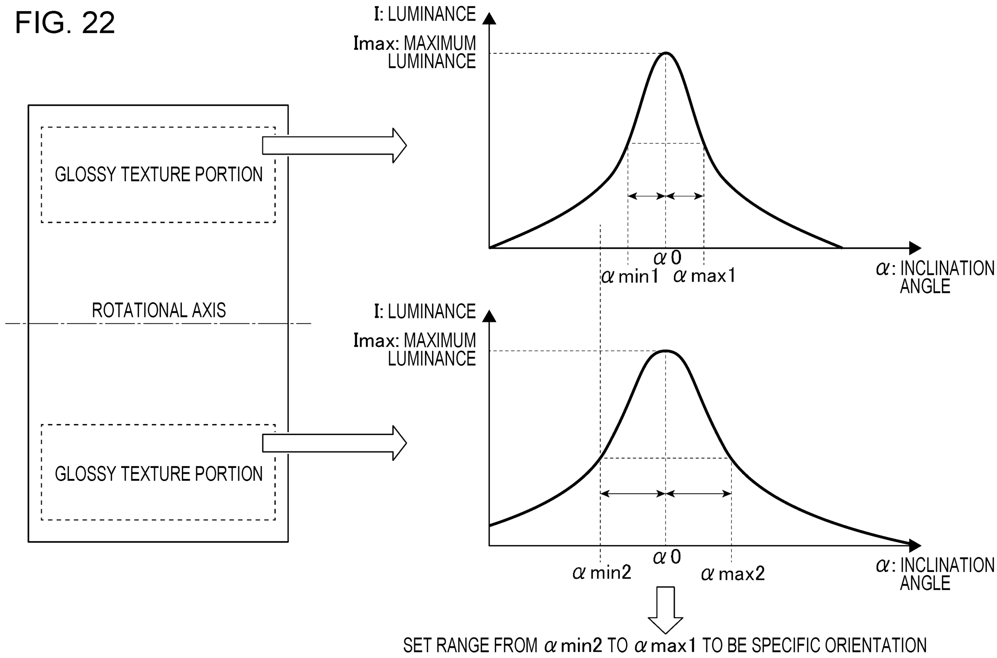

Fig. 22 is a schematic view and graphs illustrating an example of setting of the rotation angle when a printed material includes multiple glossy texture portions.

In the example in Fig. 22, two texture portions, one near the top side and the other one near the bottom side, are included in a printed material. In this case, the rotational axis is set to pass through the center position of the printed material.

In the example in Fig. 22, the rotation range of the upper texture portion is defined as a range from the minimum inclination angle αmin1 to the maximum inclination angle αmax1. The rotation range of the lower texture portion is defined as a range from the minimum inclination angle αmin2 to the maximum inclination angle αmax2.

In the example in Fig. 22, |αmax1| > |αmax2| and |αmin2| > |αmin1|.

In this case, to capture a preview image of the printed material shown in Fig. 22, the rotation range is set from the minimum inclination angle αmin2 in the negative direction to the maximum inclination angle αmax1 in the positive direction, and then, a preview image is captured.

This makes it possible to capture a preview image that allows for the checking of the gloss appearance in two texture portions with one capturing operation.

(3) In the above-described embodiment, the controller 10 (see Fig. 1) and the image forming apparatus 20 (see Fig. 1) are independently provided in the print system 1.

However, the controller 10 may be implemented as part of the image forming apparatus 20. Alternatively, the controller 10 may be implemented as a cloud server, for example.

(4) In the above-described embodiment, if the result of step S105 in Fig. 4 is YES, the format used for storing an image file is selected from among three file formats. More specifically, one of the three video file formats can be selected to store an image file. However, the format used for storing an image file, that is, the format used for generating an image file, is not limited to a video file.

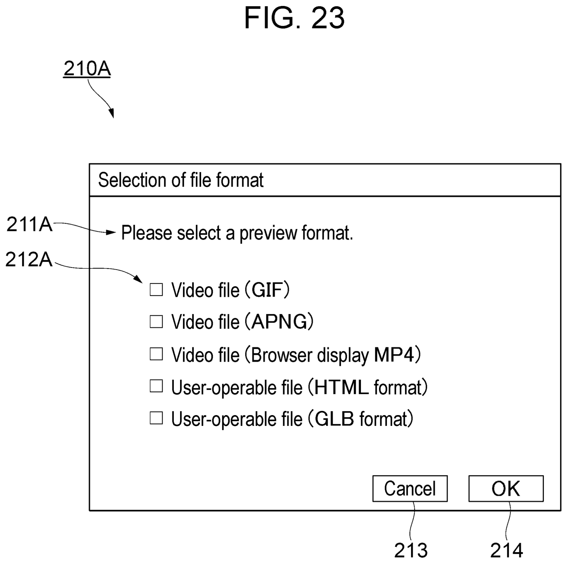

Fig. 23 illustrates another example of the selection screen (that is, a selection screen 210A) for selecting the format for storing an image file, which is displayed after the "file generate" button is pressed. In Fig. 23, elements on the display screen 210A corresponding to those on the display screen 210 in Fig. 7 are designated by like reference numerals.

In Fig. 23, a description 211A states a message "Please select a preview format".

In a selection field 212A in Fig. 23, five file formats are presented. More specifically, video files "GIF", "APNG", and "Browser display MP4", and user-operable files "HTML format" and "GLB format" are presented.

The video files "GIF" and "APNG" correspond to "GIF" and "APNG" in Fig. 7. The video file "Browser display MP4" corresponds to a high-quality video file distributed via a web, for example.

The user-operable file "HTML format" corresponds to an HTML file that can be manipulated by a user. The user-operable file "GLB format" corresponds to a GLB file that can be manipulated by a user on a three-dimensional viewer or another device.

The controller 10 (see Fig. 1), which presents the selection screen 210A, performs control operations to generate a user-operable file, to generate a video file, and to switch between the generation of a video file and the generation of a user-operable file.

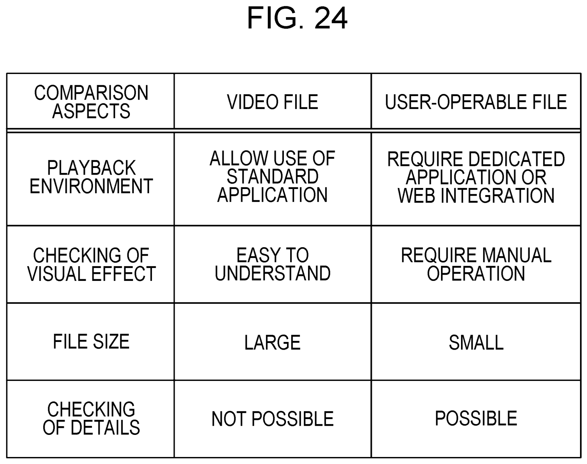

Fig. 24 is a table illustrating comparison results between video files and user-operable files.

The video files can support various playback environments and are easy to check visual effects, while the user-operable files have a small file size and implement detailed checking of finishing quality.

In this manner, the video files and the user-operable files each have advantages over the other. Using the selection screen 210A shown in Fig. 23 enables a user to easily switch between the file formats in accordance with the user's intended use.

(5) In the above-described embodiment, various approaches to determining the specific orientation have been discussed.

For example, in approach 5, the method for determining the specific orientation by giving attention to the surface roughness of a glossy texture portion (portion printed with a spot color, such as a metallic color, for example) has been discussed with reference to Figs. 12A and 12B.

However, the approach to determining the specific orientation is not limited to the above-described examples.

For instance, attention may be directed to a combination of the application order of CMYK toner and metallic toner, that is, whether the metallic toner is applied onto the front side or the rear side of CMYK toner, the density of metallic toner, and the area ratio of metallic toner.

In accordance with the combination of these factors, one or both of the surface roughness of gloss and the maximum luminance I may vary. In accordance with the variation of the surface roughness and/or the maximum luminance I, the rotation range (that is, from the negative minimum inclination angle αmin to the positive maximum inclination angle αmax) of a preview image corresponding to the specific orientation may be adjusted in the following manner.

If the maximum luminance I is lowered while the surface roughness of gloss is increased, the rotation range of a preview image may be adjusted to be larger.

If the maximum luminance I is elevated while the surface roughness of gloss is decreased, the rotation range of a preview image may be adjusted to be smaller.

### (5-1) Approach 11

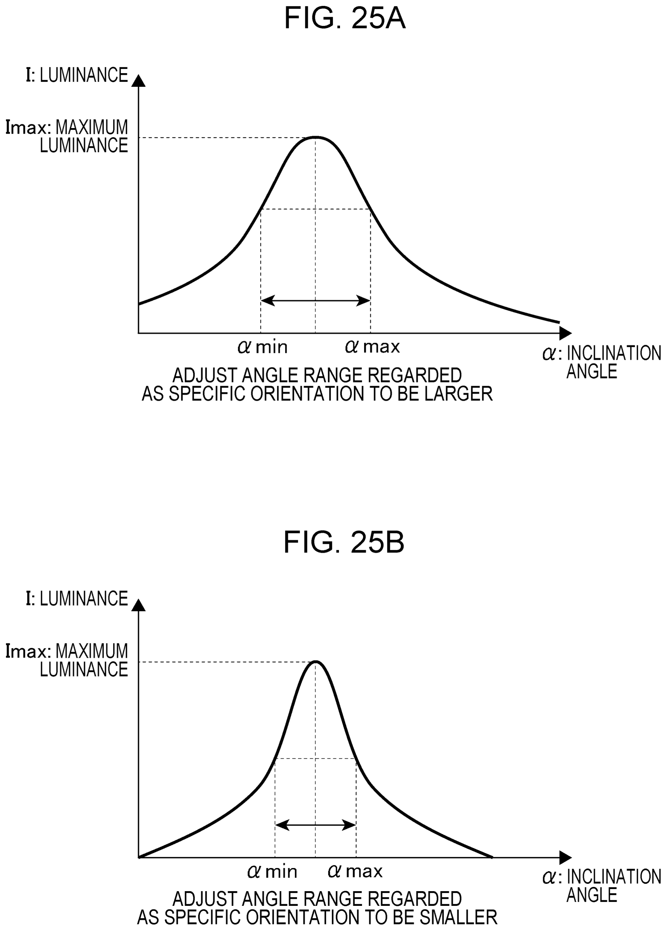

Figs. 25A and 25B are graphs illustrating a difference in the rotation range regarded as the specific orientation depending on the application order of a metallic color and the surface roughness.

Fig. 25A illustrates the relationship between the inclination angle α and the luminance I when a metallic color is placed on the rear side of CMYK and the surface roughness is increased.

In Fig. 25A, the angle range in which the luminance becomes high (that is, specular reflection is observed) becomes wider than that determined in approach 5.

The angle range shown in Fig. 25A is an example of the second angle range. The distribution shape of the luminance shown in Fig. 25A is an example of the second shape.

Fig. 25B illustrates the relationship between the inclination angle α and the luminance I when a metallic color is placed on the front side of CMYK and the surface roughness is decreased.

In Fig. 25B, the angle range in which the luminance becomes high (that is, specular reflection is observed) becomes narrower than that determined in approach 5.

The angle range shown in Fig. 25B is an example of the first angle range. The distribution shape of the luminance shown in Fig. 25B is an example of the first shape.

### (5-2) Approach 12

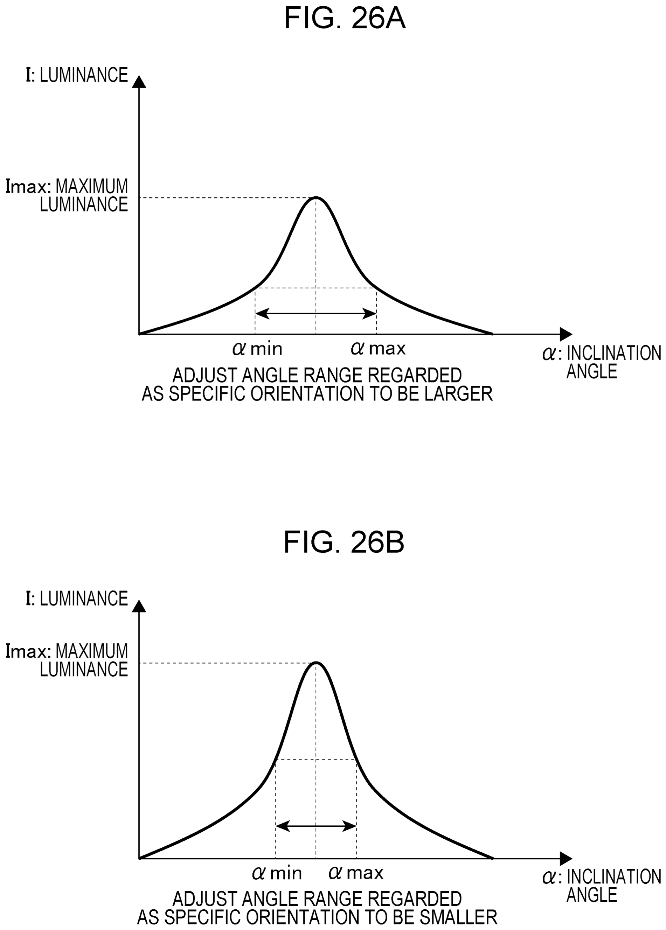

Figs. 26A and 26B are graphs illustrating a difference in the rotation range regarded as the specific orientation depending on the application order of a metallic color and the maximum luminance I.

Fig. 26A illustrates the relationship between the inclination angle α and the luminance I when a metallic color is placed on the rear side of CMYK and the maximum luminance I is decreased.

In Fig. 26A, the angle range in which the luminance becomes high (that is, specular reflection is observed) becomes wider than that determined in approach 5.

The angle range shown in Fig. 26A is an example of the second angle range. The distribution shape of the luminance shown in Fig. 26A is an example of the second shape.

Fig. 26B illustrates the relationship between the inclination angle α and the luminance I when a metallic color is placed on the front side of CMYK and the luminance I is increased.

In Fig. 26B, the angle range in which the luminance becomes high (that is, specular reflection is observed) becomes narrower than that determined in approach 5.

The angle range shown in Fig. 26B is an example of the first angle range. The distribution shape of the luminance shown in Fig. 26B is an example of the first shape.

(6) In the above-described embodiment, various approaches to determining the specific orientation have been discussed.

For example, in approach 5, the relationship between the surface roughness of a glossy texture portion and the playback speed of an image file during the playback operation of the rotation range (that is, from the minimum inclination angle αmin in the negative direction to the maximum inclination angle αmax in the positive direction) of a preview image in the specific orientation has been discussed with reference to Figs. 13A and 13B.

More specifically, the playback speed in Fig. 13A in which the surface roughness is small is controlled to be lower than that in Fig. 13B in which the surface roughness is large.

The control operation for the playback speed may be applicable, not only to the surface roughness, but also to other factors.

For example, when the surface roughness is large and the maximum luminance is low, the playback speed of an image file may be increased. In other words, the rotation angle per unit time (that is, the rotation amount) may be increased. This is because the luminance variation based on the rotation angle is relatively small. Hence, the playback speed of a video file is increased to facilitate easy observation of the luminance variation.

In contrast, when the surface roughness is small and the maximum luminance is high, the playback speed of an image file may be decreased. In other words, the rotation angle per unit time (that is, the rotation amount) may be decreased. This is because the luminance variation based on the rotation angle is relatively large. Hence, the playback speed of a video file is decreased to facilitate easy observation of the luminance variation.

(7) In the exemplary embodiments, the processes are performed by any computer. The computer may perform the processes by using a processor serving as hardware, a program serving as software, or combination of these.

In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

(8) The present disclosure may be applicable to programs and program products.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### (Appendix)

(((1))) An information processing system comprising:
   a processor configured to:
      generate, based on print data used for at least generating a printed material and information on a light source used for observing the printed material, a video representing changes in orientation of the printed material when the printed material is observed in a specific direction; and
      output the video as a file,
   wherein the video includes an image of the printed material positioned in an orientation in which a maximum luminance value or a value in a vicinity thereof of light, which is emitted from the light source and is reflected by the printed material, is observed in a region where gloss appears in the printed material.
(((2))) The information processing system according to (((1))), wherein the processor is configured to:
   set, when a distribution shape of luminance values of the reflected light, which is obtained by varying an inclination angle of the printed material to be displayed, is a first shape, a speed for varying the inclination angle to a first speed, the inclination angle being varied to include an inclination angle at which the printed material is positioned in an orientation when being observed in the specific direction in which the maximum luminance value or a value in a vicinity thereof of the reflected light is observed; and
   set, when the distribution shape of the luminance values of the reflected light is a second shape, the second shape being broader than the first shape, the speed for varying the inclination angle to a second speed, the second speed being faster than the first speed.
(((3))) The information processing system according to (((1))) or (((2))), wherein the processor is configured to:
   set, when a distribution shape of luminance values of the reflected light, which is obtained by varying an inclination angle of the printed material to be displayed, is a first shape, a variable range of the inclination angle to a first angle range, the inclination angle being varied to include an inclination angle at which the printed material is positioned in an orientation when being observed in the specific direction in which the maximum luminance value or a value in a vicinity thereof of the reflected light is observed; and
   set, when the distribution shape of the luminance values of the reflected light is a second shape, the second shape being broader than the first shape, the variable range of the inclination angle to a second angle range, the second angle range being greater than the first angle range.
(((4))) The information processing system according to one of (((1))) to (((3))), wherein the processor is configured to:
   set a speed for varying an inclination angle of the printed material to be displayed to a first speed when a region where the gloss appears in part of the printed material is determined based on the print data and when a surface roughness of the determined region is a first roughness; and
   set the speed for varying the inclination angle of the printed material to a second speed, the second speed being faster than the first speed, when the surface roughness of the determined region is a second roughness, the second roughness being larger than the first roughness.
(((5))) The information processing system according to one of (((1))) to (((4))), wherein the processor is configured to:
   set a variable range of an inclination angle of the printed material to be displayed to a first angle range when a region where the gloss appears in part of the printed material is determined based on the print data and when a surface roughness of the determined region is a first roughness; and
   set the variable range of the inclination angle to a second angle range, the second angle range being greater than the first angle range, when the surface roughness of the determined region is a second roughness, the second roughness being larger than the first roughness.
(((6))) The information processing system according to one of (((1))) to (((5))), wherein the processor is configured to: when a plurality of regions are determined, based on the print data, as a region where the gloss appears in part of the printed material,
   determine a third line passing through a center or a centroid of a first region and a center or a centroid of a second region, the first region being a region where a minimum luminance value or a minimum surface roughness value is observed among the plurality of regions, the second region being a region where the maximum luminance value or a maximum surface roughness value is observed among the plurality of regions;
   determine, after the third line is determined, a fourth line which is perpendicular to the third line and which passes through a center position of the printed material; and
   control the orientation of the printed material to be displayed by using the fourth line as a rotational axis.
(((7))) The information processing system according to one of (((1))) to (((6))), wherein the processor is configured to, when a plurality of regions are determined, based on the print data, as a region where the gloss appears in part of the printed material, control the orientation of the printed material to be displayed, for each of the plurality of regions, in accordance with a relationship between a position of the light source represented by the information on the light source and a position of a corresponding region where the gloss appears.
(((8))) The information processing system according to one of (((1))) to (((7))), wherein the processor is configured to, when a plurality of regions are determined, based on the print data, as a region where the gloss appears in part of the printed material, vary an inclination angle of the printed material to be displayed by including an inclination angle at which the printed material is positioned in an orientation when being observed in the specific direction in which the maximum luminance value or a value in a vicinity thereof of the reflected light is observed in a region selected by a user from among the plurality of regions.
(((9))) The information processing system according to one of (((1))) to (((8))), wherein the processor is configured to, when a region where the gloss appears in part of the printed material is determined based on the print data, control the orientation of the printed material to be displayed in accordance with a relationship between a position of the light source represented by the information on the light source and a position of the region where the gloss appears.
(((10))) The information processing system according to (((9))), wherein the processor is configured to:
   determine a first line passing through the position of the light source and a center or a centroid of the region where the gloss appears;
   determine, after the first line is determined, a second line which is perpendicular to the first line and which passes through a center position of the printed material; and
   control the orientation of the printed material by using the second line as a rotational axis.
(((11))) The information processing system according to (((9))), wherein the processor is configured to, when a plurality of regions are determined as the region where the gloss appears in part of the printed material, control the orientation of the printed material for each of the plurality of regions in accordance with the relationship between the position of the light source and the position of a corresponding region where the gloss appears.
(((12))) The information processing system according to (((9))), wherein the processor is configured to, when a plurality of regions are determined as the region where the gloss appears in part of the printed material, control the orientation of the printed material in accordance with the relationship between the position of the light source and a position of a region selected by a user from among the plurality of regions.
(((13))) The information processing system according to one of (((1))) to (((12))), wherein the processor is configured to, when a region where the gloss appears in part of the printed material is determined based on the print data and when anisotropic reflected light is observed in the region where the gloss appears, control the orientation of the printed material to be displayed with respect to a first rotational axis and a second rotational axis, the first rotational axis being determined by a relationship between a position of the light source represented by the information on the light source and a position of the region where the gloss appears, the second rotational axis being determined by a direction in which the anisotropic reflected light is observed.
(((14))) The information processing system according to (((13))), wherein the processor is configured to add a third rotational axis between the first rotational axis and the second rotational axis and to control the orientation of the printed material also with respect to the third rotational axis.
(((15))) The information processing system according to one of (((1))) to (((14))), wherein the processor is configured to:
   generate a manually operable file;
   generate a video file; and
   switch between generation of the video file and generation of the manually operable file.
(((16))) A program causing a computer to execute a process comprising:
   generating, based on print data used for at least generating a printed material and information on a light source used for observing the printed material, a video representing changes in orientation of the printed material when the printed material is observed in a specific direction; and
   outputting the video as a file,
   wherein the video includes an image of the printed material positioned in an orientation in which a maximum luminance value or a value in a vicinity thereof of light, which is emitted from the light source and is reflected by the printed material, is observed in a region where gloss appears in the printed material.

The information processing system according to (((1))) can make it easy to create a video that allows a user to check the appearance of gloss in a print preview of a printed material using glossy spot colors or a foil-stamped printed material.

The information processing system according to (((2))) can make it easy to check gloss characteristics appearing on the surface of a printed material.

The information processing system according to (((3))) can make it easy to check the gloss characteristics appearing on the surface of a printed material.

The information processing system according to (((4))) can make it easy to check the gloss characteristics appearing on the surface of a printed material.

The information processing system according to (((5))) can make it easy to check the gloss characteristics appearing on the surface of a printed material.

The information processing system according to (((6))) can make it easy to check variations in the appearance of gloss even in a case where gloss is present in multiple regions.

The information processing system according to (((7))) can make it easy to check variations in the appearance of gloss in each of multiple regions.

The information processing system according to (((8))) can make it easy to check the appearance of gloss in a specific region selected by a user.

The information processing system according to (((9))) can make it easy to check the appearance of gloss regardless of where gloss appears in a printed material.

The information processing system according to (((10))) can make it easy to check the appearance of gloss regardless of where gloss appears in a printed material.

The information processing system according to (((11))) can make it easy to check variations in the appearance of gloss even in a case where gloss is distributed over multiple regions of a printed material.

The information processing system according to (((12))) can make it easy to check the appearance of gloss in a specific region selected by a user.

The information processing system according to (((13))) can make it easy to check the appearance of gloss in a region where anisotropic reflection occurs.

The information processing system according to (((14))) can make it easy to check the appearance of gloss in a region where anisotropic reflection occurs.

The information processing system according to (((15))) can make it easy for a user to switch between file formats in accordance with the user's intended use.

The program according to (((16))) can make it easy to create a video that allows a user to check the appearance of gloss in a print preview of a printed material using glossy spot colors or a foil-stamped printed material.

## Claims

1. An information processing system comprising:
a processor configured to:
generate, based on print data used for at least generating a printed material and information on a light source used for observing the printed material, a video representing changes in orientation of the printed material when the printed material is observed in a specific direction; and
output the video as a file,
wherein the video includes an image of the printed material positioned in an orientation in which a maximum luminance value or a value in a vicinity thereof of light, which is emitted from the light source and is reflected by the printed material, is observed in a region where gloss appears in the printed material.

2. The information processing system according to claim 1, wherein the processor is configured to:
set, when a distribution shape of luminance values of the reflected light, which is obtained by varying an inclination angle of the printed material to be displayed, is a first shape, a speed for varying the inclination angle to a first speed, the inclination angle being varied to include an inclination angle at which the printed material is positioned in an orientation when being observed in the specific direction in which the maximum luminance value or a value in a vicinity thereof of the reflected light is observed; and
set, when the distribution shape of the luminance values of the reflected light is a second shape, the second shape being broader than the first shape, the speed for varying the inclination angle to a second speed, the second speed being faster than the first speed.

3. The information processing system according to claim 1 or claim 2, wherein the processor is configured to:
set, when a distribution shape of luminance values of the reflected light, which is obtained by varying an inclination angle of the printed material to be displayed, is a first shape, a variable range of the inclination angle to a first angle range, the inclination angle being varied to include an inclination angle at which the printed material is positioned in an orientation when being observed in the specific direction in which the maximum luminance value or a value in a vicinity thereof of the reflected light is observed; and
set, when the distribution shape of the luminance values of the reflected light is a second shape, the second shape being broader than the first shape, the variable range of the inclination angle to a second angle range, the second angle range being greater than the first angle range.

4. The information processing system according to any preceding claim, wherein the processor is configured to:
set a speed for varying an inclination angle of the printed material to be displayed to a first speed when a region where the gloss appears in part of the printed material is determined based on the print data and when a surface roughness of the determined region is a first roughness; and
set the speed for varying the inclination angle of the printed material to a second speed, the second speed being faster than the first speed, when the surface roughness of the determined region is a second roughness, the second roughness being larger than the first roughness.

5. The information processing system according to any preceding claim, wherein the processor is configured to:
set a variable range of an inclination angle of the printed material to be displayed to a first angle range when a region where the gloss appears in part of the printed material is determined based on the print data and when a surface roughness of the determined region is a first roughness; and
set the variable range of the inclination angle to a second angle range, the second angle range being greater than the first angle range, when the surface roughness of the determined region is a second roughness, the second roughness being larger than the first roughness.

6. The information processing system according to any preceding claim, wherein the processor is configured to: when a plurality of regions are determined, based on the print data, as a region where the gloss appears in part of the printed material,
determine a third line passing through a center or a centroid of a first region and a center or a centroid of a second region, the first region being a region where a minimum luminance value or a minimum surface roughness value is observed among the plurality of regions, the second region being a region where the maximum luminance value or a maximum surface roughness value is observed among the plurality of regions;
determine, after the third line is determined, a fourth line which is perpendicular to the third line and which passes through a center position of the printed material; and
control the orientation of the printed material to be displayed by using the fourth line as a rotational axis.

7. The information processing system according to any preceding claim, wherein the processor is configured to, when a plurality of regions are determined, based on the print data, as a region where the gloss appears in part of the printed material, control the orientation of the printed material to be displayed, for each of the plurality of regions, in accordance with a relationship between a position of the light source represented by the information on the light source and a position of a corresponding region where the gloss appears.

8. The information processing system according to any preceding claim, wherein the processor is configured to, when a plurality of regions are determined, based on the print data, as a region where the gloss appears in part of the printed material, vary an inclination angle of the printed material to be displayed by including an inclination angle at which the printed material is positioned in an orientation when being observed in the specific direction in which the maximum luminance value or a value in a vicinity thereof of the reflected light is observed in a region selected by a user from among the plurality of regions.

9. The information processing system according to any preceding claim, wherein the processor is configured to, when a region where the gloss appears in part of the printed material is determined based on the print data, control the orientation of the printed material to be displayed in accordance with a relationship between a position of the light source represented by the information on the light source and a position of the region where the gloss appears.

10. The information processing system according to claim 9, wherein the processor is configured to:
determine a first line passing through the position of the light source and a center or a centroid of the region where the gloss appears;
determine, after the first line is determined, a second line which is perpendicular to the first line and which passes through a center position of the printed material; and
control the orientation of the printed material by using the second line as a rotational axis.

11. The information processing system according to claim 9 or claim 10, wherein the processor is configured to, when a plurality of regions are determined as the region where the gloss appears in part of the printed material, control the orientation of the printed material for each of the plurality of regions in accordance with the relationship between the position of the light source and the position of a corresponding region where the gloss appears, and/or control the orientation of the printed material in accordance with the relationship between the position of the light source and a position of a region selected by a user from among the plurality of regions.

12. The information processing system according to any preceding claim, wherein the processor is configured to, when a region where the gloss appears in part of the printed material is determined based on the print data and when anisotropic reflected light is observed in the region where the gloss appears, control the orientation of the printed material to be displayed with respect to a first rotational axis and a second rotational axis, the first rotational axis being determined by a relationship between a position of the light source represented by the information on the light source and a position of the region where the gloss appears, the second rotational axis being determined by a direction in which the anisotropic reflected light is observed, and
optionally wherein the processor is configured to add a third rotational axis between the first rotational axis and the second rotational axis and to control the orientation of the printed material also with respect to the third rotational axis.

13. The information processing system according to any preceding claim, wherein the processor is configured to:
generate a manually operable file;
generate a video file; and
switch between generation of the video file and generation of the manually operable file.

14. A program causing a computer to execute a process comprising:
generating, based on print data used for at least generating a printed material and information on a light source used for observing the printed material, a video representing changes in orientation of the printed material when the printed material is observed in a specific direction; and
outputting the video as a file,
wherein the video includes an image of the printed material positioned in an orientation in which a maximum luminance value or a value in a vicinity thereof of light, which is emitted from the light source and is reflected by the printed material, is observed in a region where gloss appears in the printed material.

15. An information processing method comprising:
generating, based on print data used for at least generating a printed material and information on a light source used for observing the printed material, a video representing changes in orientation of the printed material when the printed material is observed in a specific direction; and
outputting the video as a file,
wherein the video includes an image of the printed material positioned in an orientation in which a maximum luminance value or a value in a vicinity thereof of light, which is emitted from the light source and is reflected by the printed material, is observed in a region where gloss appears in the printed material.
